# EUROPÄISCHE PATENTSCHRIFT

(11) **EP 2 109 059 B1**
(45) Veröffentlichungstag und Bekanntmachung des Hinweises auf die Patenterteilung: **17.05.2017**
(21) Anmeldenummer: 08007049.3
(22) Anmeldetag: 09.04.2008
(51) Int. Cl.: G06K 7/00, G06K 17/00

(54) **Behältnis zur Aufnahme von Artikeln**
Container for receiving articles
Récipient destiné à la réception d'articles

(43) Veröffentlichungstag der Anmeldung: 14.10.2009
(73) Patentinhaber: Cavea Identification GmbH, 82140 Olching (DE)
(72) Erfinder: Kilian, Dieter Dr., 82140 Olching (DE)
(74) Vertreter: Roos, Peter

(56) Entgegenhaltungen:
- EP-A- 1 837 799
- US-A- 5 565 858

## Beschreibung

### Gebiet der Erfindung

Die vorliegende Erfindung betrifft ein Behältnis zur Aufnahme von Artikeln, wie beispielsweise einen Einkaufswagen zur Aufnahme von Waren, einen Seefrachtcontainer zum Transport von Gütern, einen in Passagierflugzeugen verwendbaren Rollcontainer zur Aufnahme von Speisen und Getränken, ein "Rack" (z. B. IT-Server-Rack) zum Einbau von elektrischen oder elektronischen Geräten etc.

In vielen Anwendungsbereichen ist es wünschenswert, die tatsächlich in einem Behältnis aufgenommenen Artikel möglichst einfach und rasch zu erfassen bzw. zu identifizieren.

### Beschreibung des Standes der Technik

Die RFID ("radio frequency identification") ist eine bekannte Technik zur drahtlosen Identifikation von Objekten, die seit geraumer Zeit im Bereich der so genannten Auto-ID, also der automatischen Bereitstellung von Informationen zu Personen, Tieren, Gütern und Waren eingesetzt wird.

Jedes Auto-ID-System basiert auf der Verwendung künstlicher Identifikationsmerkmale zur Ermöglichung einer maschinengerechten Identifizierung. Die heute noch weit verbreiteten Barcode-Etiketten, die schon vor vielen Jahren den Bereich der Auto-ID revolutionierten, werden für gegenwärtig an Bedeutung gewinnende Anwendungsfälle zunehmend uninteressant. Nachteilig bei Barcodes ist oftmals deren geringe Speicherkapazität für Informationen, die zudem auch nicht nachträglich verändert werden können. Außerdem ist das Auslesen bzw. Ablesen ("Scannen") von Daten relativ umständlich und zeitaufwändig (Sichtkontakt erforderlich).

Diese Nachteile können mit der RFID beseitigt werden. RFID-Systeme und -Verfahren sind in großer Vielfalt an sich bekannt. Lediglich beispielhaft sei hierzu verwiesen auf das "RFID-Handbuch", 3. Auflage, Klaus Finkenzeller, Carl Hanser Verlag München Wien, 2002.

Ein RFID-System besteht aus zumindest einem Lesegerät zum Auslesen von Daten, die in einem Transponder gespeichert sind, wobei die Datenübertragung zwischen Transponder und Lesegerät mittels elektromagnetischer Wellen stattfindet. Bei niedrigeren Frequenzen geschieht dies induktiv über das Nahfeld, bei höheren Frequenzen über das elektromagnetische Fernfeld. Das Lesegerät kann wie auch der Transponder sowohl als Sender als auch Empfänger für die elektromagnetische Strahlung fungieren. Induktiv gekoppelte Systeme besitzen eine vergleichsweise geringe Reichweite. Typische Vertreter dieser Variante sind z. B. kontaktlose Chipkarten und automatische Zugangssysteme. Demgegenüber besitzen Systeme mit elektromagnetischer Fernfeldkopplung eine vergleichsweise große Reichweite. Gängige Frequenzen der RFID-Systeme mit Fernfeldkopplung liegen in der Größenordnung von einigen hundert MHz. Gesetzlich sind oftmals ganz bestimmte Frequenzbereiche vorgeschrieben, wie z. B. 865-869,5 MHz oder 2,45 GHz.

Bei den gegenwärtig im Einsatz befindlichen RFID-Systemen und -Verfahren ergibt sich in der Praxis eine Vielzahl von Problemen, welche die Nutzung der RFID-Technologie in manchen Anwendungsbereichen erschweren wenn nicht unmöglich machen.

Eine erste Reihe von Problemen betrifft die Zuverlässigkeit der Technologie. Diesbezüglich besteht der Wunsch, sämtliche in einem Erfassungsbereich des jeweiligen Lesegeräts befindliche Transponder zu identifizieren und in diesen Transpondern gespeicherte Daten fehlerfrei auszulesen (und gegebenenfalls fehlerfrei zu verändern). Dies wird in der Praxis jedoch z. B. durch Interferenzen mehrerer RFID-Lesegeräte untereinander, Störungen durch spontane Funkemissionen in der Umgebung, Störungen durch andere Funkgeräte und manchmal durch eine Sabotage durch Störsender verhindert.

Einen weiteren Problemkreis stellt die Datensicherheit dar. Diesbezüglich besteht z. B. die Gefahr eines Abhörens der Datenkommunikation und die Gefahr eines Vortäuschens von Information. Die Kommunikation zwischen einem RFID-Lesegerät und Transpondern ist im Wesentlichen einer normalen Funkverbindung zwischen einem Sender und einem Empfänger vergleichbar. Ein externer Lauscher kann einzelne Bitmuster mithören, fälschen, vorspielen oder den Empfänger durch eine Überhäufung von Information ähnlich einem so genannten Denial-of-Service (DoS)-Angriff betriebsunfähig machen. Insbesondere zum Identifizieren von Artikeln, die sich in einem Behältnis befinden, scheiterten bekannte RFID-Systeme bislang oftmals an den oben geschilderten Problemen. Lediglich beispielhaft seien hierzu die bislang eher erfolglosen Versuche erwähnt, in einem Supermarkt an der Kasse die Inhalte von daran vorbeigeschobenen Einkaufswagen mittels eines RFID-Systems zu erfassen, also für jeden Einkaufswagen separat und zuverlässig die an oder in den Waren integrierten Transponder zu identifizieren. In diesem Anwendungsfall wird eine Datenübertragung zwischen Transponder und Lesegerät beispielsweise durch metallische Strukturen der Artikel (z. B. Konservendosen) als auch des Behältnisses (z. B. metallischer Einkaufswagen) beeinträchtigt.Das Dokument US 5565858 A ist ein Beispiel des Stands der Technik.

### Abriss der Erfindung

Es ist eine Aufgabe der vorliegenden Erfindung, eine zuverlässige Identifizierung von Artikeln zu vereinfachen, die sich in einem Behältnis befinden.

Diese Aufgabe wird gemäß der Erfindung durch ein Behältnis nach Anspruch 1 bzw. ein RFID-System nach Anspruch 9 gelöst. Die abhängigen Ansprüche betreffen vorteilhafte Weiterbildungen der Erfindung.

Die Erfindung sieht ein Behältnis zur Aufnahme von jeweils mit mindestens einem RFID-Transponder versehenen Artikeln vor, umfassend eine in einem abgeschirmten Bereich des Behältnisses angeordnete RFID-Antenneneinrichtung zur Kommunikation mit den Transpondern.

Dies ermöglicht eine besonders einfache und zuverlässige Kommunikation zwischen einem Lesegerät und den einzelnen RFID-Transpondern, die sich zusammen mit der RFID-Antenneneinrichtung in einem abgeschirmten Aufnahmeraum des Behältnisses befinden. Insbesondere vereinfacht die Erfindung eine eindeutige Zuordnung der zwischen Lesegerät und RFID-Transpondern ausgetauschten Daten zu den einzelnen physikalischen Objekten (Artikeln). Dies ist in vielen Anwendungsfällen von besonderer Bedeutung.

Bei den einsetzbaren Transpondern, die z. B. in Form von Etiketten ("RFID-Tags") oder dergleichen insbesondere an oder in Gütern oder Waren angebracht oder in deren Verpackung integriert sein können, lassen sich verschiedene Arten unterscheiden: Aktive Transponder besitzen eine eigene Energieversorgung, z. B. in Form einer Batterie. Passive Transponder nutzen hingegen die Strahlungsenergie eines RFID-Senders (der z. B. im Lesegerät integriert sein kann) zum Senden der eigenen Information an das Lesegerät. Die Erfindung ist insbesondere für diese Art von Transpondern sehr vorteilhaft einsetzbar. Eine Mischform stellen so genannte semi-passive Transponder dar, die z. B. lediglich mit einer schwachen Stützbatterie ausgestattet sind, die zum Senden der eigenen Information genutzt wird, sobald der Transponder durch das RFID-System (z. B. durch das Lesegerät) "aus dem Schlaf geweckt" worden ist.

Überraschenderweise wird bei der Erfindung die im Stand der Technik sehr nachteilige Wirkung einer Abschirmung in eine Reihe von gravierenden Vorteilen gewandelt. Ein erster Vorteil besteht z. B. darin, dass die Antenneneinrichtung (umfassend eine oder mehrere Antennen) ohne dazwischenliegende Abschirmung in räumlicher Nähe der Artikel (und somit Transponder) angeordnet ist, was die Kommunikation vereinfacht. Ein weiterer Vorteil besteht darin, dass Interferenzen zwischen Identifizierungsvorgängen vermieden werden, die an unterschiedlichen, jedoch in räumlicher Nähe zueinander befindlichen Behältnissen durchgeführt werden. Ein weiterer Vorteil besteht darin, dass die Kommunikation nicht durch spontane Funkemissionen in der Umgebung oder andere externe Störquellen beeinträchtigt wird. Schließlich besteht ein weiterer Vorteil darin, dass ein unberechtigtes Abhören der Kommunikation erheblich erschwert ist.

In einer bevorzugten Ausführungsform umgibt die Abschirmung den zur Aufnahme der Artikel genutzten Aufnahmeraum größtenteils, insbesondere im Wesentlichen vollständig.

In einer Ausführungsform ist die Abschirmung derart ausgebildet, dass diese mindestens 50 %, insbesondere mindestens 60 % einer Strahlungsleistung der RFID-Antenneneinrichtung absorbiert.

In den meisten Ländern unterliegen RFID-Systeme als funktechnische Anlagen sehr restriktiven gesetzlichen Vorschriften. Diese Vorschriften können sich z. B. auf die verwendeten Frequenzen der elektromagnetischen Strahlung und/oder die Leistung beziehen, mit welcher der oder die Sender des Systems betrieben werden. In dieser Hinsicht besteht ein überraschender Vorteil der Erfindung darin, dass die RFID-Antenneneinrichtung je nach Ausführung praktisch unabhängig von solchen gesetzlichen Vorschriften betrieben werden kann. Vorteilhaft lässt sich das RFID-System weltweit an jedem Ort, zu jeder Zeit und mit beliebiger Funkwellenlänge und -leistung realisieren.

In einer Ausführungsform ist vorgesehen, dass eine Strahlungswellenlänge der RFID-Antenneneinrichtung in einem Bereich von 0,8 bis 8 GHz liegt.

In einer Ausführungsform ist vorgesehen, dass eine Strahlungswellenlänge der RFID-Antenneneinrichtung in einem Bereich liegt, der für den Betrieb von funktechnischen Anlagen gesetzlich untersagt ist.

In einer bevorzugten Ausführungsform ist eine Strahlungsleistung der RFID-Antenneneinrichtung so groß bemessen, dass der Betrieb des RFID-Systems ohne die Abschirmung gesetzlich untersagt wäre. Diese Strahlungsleistung kann z. B. um mindestens einen Faktor 2, insbesondere um mindestens einen Faktor 5 größer als die (ohne Abschirmung) zulässige Strahlungsleistung sein.

In einer Ausführungsform ist vorgesehen, dass die Sendeleistung der RFID-Antenneneinrichtung wenigstens 5 W, insbesondere wenigstens 10 W beträgt.

Neben einer erhöhten Sendeleistung jenseits der einschlägigen Norm (für bessere RFID-Leseergebnisse) kommt vorteilhaft auch die Möglichkeit in Betracht, RFID-Sende- und Lesegeräte einfacher, billiger und robuster hinsichtlich ihres HF-technischen Aufbaus vorzusehen.

In einer bevorzugten Ausführungsform ist vorgesehen, dass die Abschirmung mittels einer elektrisch leitenden Gehäusestruktur des Behältnisses realisiert ist.

In an sich bekannter Weise kommt als Abschirmung eine flächig ausgedehnte, elektrisch leitfähige Materialschicht, z. B. ein Metallblech oder eine Metallfolie in Betracht (alternativ z. B. leitender Kunststoff oder leitende Verbundwerkstoffe). Für die meisten der hier besonders interessierenden Anwendungsfälle bzw. Strahlungswellen-längen kann im Rahmen der Erfindung jedoch vorteilhaft das Prinzip des "Faraday-Käfigs" genutzt werden und die Abschirmung aus einer elektrisch leitfähigen Gitter- bzw. Netzstruktur gebildet werden.

Eine solche Gitter- bzw. Netzstruktur kann vorteilhaft mit vergleichsweise einfachen, insbesondere sogar handelsüblichen Materialien realisiert werden. In einer Ausführungsform umfasst die Struktur z. B. Metallstangen und/oder gelochtes Metallblech und/oder Maschendraht und/oder Drahtgeflecht. Beispielsweise können zur Bildung eines Abschirmmoduls einzelne mit Maschendraht bespannte Elemente (z. B. Metallrahmen) in variabler Größe vorgefertigt werden.

Insbesondere mit den vorstehend genannten Abschirmungskomponenten lassen sich Abschirmungswände oder ganze Abschirmungskäfige unterschiedlicher Größe modular, aus vorgefertigten Teilen, zusammensetzen.

Bei Verwendung einer nicht flächig durchgehend elektrisch leitfähigen Abschirmungskomponente sondern einer Gitter- bzw. Netzstruktur ist ein charakteristischer Strukturabstand (z. B. der gegenseitige Abstand von Metallstangen, die Maschenweite eines Maschendrahts oder ein Lochdurchmesser eines gelochten Metalls) bevorzugt um mindestens einen Faktor 2, insbesondere um mindestens einen Faktor 5 kleiner als die Wellenlänge einer elektromagnetischen Strahlung des Systems bemessen. Für eine Frequenz von etwa 870 MHz, entsprechend einer Wellenlänge von etwa 30 cm, ergibt sich damit z. B. ein charakteristischer Abstand (z. B. Maschenweite) von etwa 15 cm oder weniger (z. B. 3 cm).

In einer Ausführungsform ist vorgesehen, dass die Abschirmung mehrere hintereinander angeordnete Abschirmlagen umfasst, z. B. zwei oder drei Gitter- bzw. Netzstrukturen der vorstehend genannten Art. Ein solcher mehrlagiger Abschirmungsaufbau ermöglicht z. B. eine vergrößerte Absorption von Strahlungsleistung im Abschirmmaterial. Die mehreren Abschirmlagen können hierbei gleichartig oder verschiedenartig (z. B. mit verschiedenem charakteristischen Abstand wie z. B. Maschenweite) vorgesehen sein.

Im Rahmen der vorliegenden Erfindung kommt einem mehrlagigen Aufbau der Abschirmung bzw. einzelner Abschirmkomponenten jedoch noch eine ganz andere, wesentliche Bedeutung zu: Wenn der gegenseitige Abstand von hintereinander angeordneten Abschirmlagen etwa in der Größenordnung der betreffenden Strahlungswellenlänge liegt, was bei den hier besonders interessierenden Anwendungsfällen ohne weiteres bewerkstelligt werden kann, so lässt sich die Abschirmungswirkung in gezielter Weise durch Wahl eines bestimmten gegenseitigen Abstands drastisch verändern. Je nach konkreter Bemessung dieses gegenseitigen Abstands können an den verschiedenen Abschirmlagen reflektierte elektromagnetische Wellen z. B. destruktiv oder konstruktiv interferieren. Im ersten Fall ergibt sich eine minimale Reflektion und maximale Absorption, wohingegen im zweiten Fall die Abschirmwirkung einen maximalen Reflektionsanteil beinhaltet. Die Dämpfung, d. h. die Verringerung der Strahlungsleistung auf Grund des Durchtritts durch die Abschirmung bleibt davon unberührt.

Eine maximale Reflektion kann z. B. dann sinnvoll sein, wenn man innerhalb eines durch die Abschirmung begrenzten Erfassungsbereichs im Behältnisinnenraum funktechnisch betrachtet keine "toten Winkel" haben möchte, so dass besonders zuverlässig alle im Behältnis befindlichen Transponder identifiziert werden können.

Der Begriff "Identifikation" (von Transpondern) ist im Sinne der vorliegenden Erfindung sehr breit zu verstehen und soll alle Arten von Informations- und/oder Datenübertragung vom Transponder zum Lesegerät umfassen. Im einfachsten Fall handelt es sich z. B. um eine "1 Bit-Information" (Transponder im Behältnis oder nicht). Von größerer praktischer Bedeutung sind jedoch komplexere Daten, die im Bereich des Transponders gespeichert sind und wenigstens teilweise ausgelesen werden (z. B. so genannter EAN-Code einer Ware oder "tracking code" eines Produkts im Produktions-Materialfluss). Da-bei ist es keineswegs ausgeschlossen und oftmals sogar bevorzugt, dass während des "Identifikationsprozesses" auch eine Informations- bzw. Datenübertragung in umgekehr-ter Richtung erfolgt.

Im Gegensatz dazu kann es Fälle geben, beispielsweise wenn die Strahlungsleistung eines Lesegeräts exakt auf die Antenne des Transponders angepasst bzw. abgestimmt werden soll, in denen eine möglichst große Absorption von Sendeleistung in der Abschirmung zweckmäßig ist.

In einer Ausführungsform ist vorgesehen, dass wenigstens ein Teil der Abschirmung als ein Tor ausgebildet ist, welches in einer Öffnungsstellung ein Einbringen und Ausbringen von mit Transpondern versehenen Artikeln gestattet und welches in einer Schließstellung abschirmt.

Der Begriff "Tor" ist hierbei sehr breit zu verstehen und umfasst beispielsweise plattenartige bzw. türartige bewegbare Abschirmkomponenten wie z. B. Klappen, schwenkbare Türen, Schiebetüren und Schwingtüren.

In einer bevorzugten Ausführungsform der Erfindung ist vorgesehen, dass das Behältnis ferner eine von außen zugängliche elektrische Anschlusseinrichtung umfasst. Eine solche Anschlusseinrichtung kann verschiedene Zwecke erfüllen. Zunächst kann damit das eigentliche RFID-Lesegerät extern angeordnet und über die elektrische Anschlusseinrichtung mit der im Aufnahmeraum des Behältnisses angeordneten RFID-Antenneneinrichtung verbunden werden. Ein Anwendungsbeispiel hierfür ist z. B. ein Einkaufswagen, an welchem die Kassenkraft in einem Supermarkt ein Kabel anschließt, welches die im Einkaufswagen befindliche Antenne mit einem im Kassenbereich angeordneten Lesegerät verbindet. Auch wenn das RFID-Lesegerät am oder im Behältnis integriert ist, kann eine von außen zugängliche elektrische Anschlusseinrichtung von praktischem Nutzen sein, nämlich z. B. um das Lesegerät mit elektrischer Energie zu versorgen und/oder eine kabelgebundene Datenkommunikation mit einer externen Einrichtung zu bewerkstelligen. Ferner kann eine solche elektrische Anschlusseinrichtung auch vorgesehen sein, um die im Behältnis aufgenommenen Artikel mit einer externen Einrichtung zu verbinden, beispielsweise wenn es sich bei den Artikeln um elektrische oder elektronische Geräte handelt. In diesem Fall kann über die Anschlusseinrichtung und eine externe Verkabelung eine Energieversorgung und/oder eine Kommunikation mit den Geräten bewerkstelligt werden. Schließlich kann eine elektrische Anschlusseinrichtung auch zur Versorgung und/oder zur Kommunikation mit Einrichtungen vorgesehen sein, die gemäß Weiterbildungen der Erfindung an oder in dem Behältnis integriert sein können. Ein Beispiel hierfür ist eine weiter unten noch erläuterte Sensoreinrichtung.

In einer vorteilhaften Ausführungsform dient die elektrische Anschlusseinrichtung des Behältnisses zugleich mehreren der vorstehend erwähnten Zwecken.

Die elektrische Anschlusseinrichtung kann insbesondere als Steckverbindungseinrichtung (Stecker oder Buchse) vorgesehen sein.

Falls ein RFID-System mit mehreren erfindungsgemäßen Behältnissen betrieben wird, so können jeweilige elektrische Anschlusseinrichtungen auch zum Aufbau eines "Bussystems" genutzt werden. Über ein solches Bussystem könnten z. B. einzelne, an oder in den Behältnissen integrierte Lesegeräte angesteuert werden bzw. deren Erfassungsdaten an eine zentrale Einrichtung übermittelt werden, die ebenfalls an dem Bussystem angeschlossen ist.

In einer Ausführungsform ist das Behältnis als eine Haltevorrichtung mit Haltemitteln für aufgenommene Artikel ausgebildet. Ein Beispiel hierfür ist ein speziell zur Aufnahme von elektrischen oder elektronischen Geräten vorgesehnes Behältnis (so genanntes "Rack"). Ein anderes Beispiel hierfür ist der eingangs bereits erwähnte, im Flugzeug verwendbare Rollcontainer zur Aufnahme von Speisen und/oder Getränken in vorgegebenen Aufnahmepositionen für die einzelnen Artikel. Insbesondere für Behältnisse mit vorgegebenen Aufnahmepositionen für die einzelnen Artikel kann für das betreffende RFID-System vorgesehen sein, dass nicht nur die im Behältnis befindlichen Artikel sondern auch deren Positionen identifiziert werden..

In einer Ausführungsform ist vorgesehen, dass das Behältnis selbst mit einem RFID-Transponder versehen ist, etwa um bei einem für mehrere Behältnisse betriebenen RFID-System auch die einzelnen Behältnisse identifizieren zu können.

Falls ein solcher, dem Behältnis zugeordneter Transponder innerhalb des abgeschirmten Aufnahmeraumes angeordnet ist, so kann zur Kommunikation mit diesem Transponder vorteilhaft die ebenfalls im abgeschirmten Bereich vorgesehene Antenneneinrichtung genutzt werden. Ebenso ist es jedoch möglich, den Transponder des Behältnisses außerhalb des abgeschirmten Bereiches vorzusehen und zur Identifizierung des Behältnisses eine externe RFID-Antenneneinrichtung zu verwenden. Schließlich kann der Transponder des Behältnisses auch so angeordnet werden, dass dessen Identifizierung sowohl mit einer innerhalb des abgeschirmten Aufnahmeraumes angeordneten als auch einer externen Antenneneinrichtung erfolgen kann. Dies gelingt beispielsweise mit einer Anordnung des Transponders in einem "ausgesparten Bereich" einer ansonsten flächig ausgedehnten Abschirmung.

Alternativ oder zusätzlich zu einem Transponder, der das Behältnis selbst kennzeichnet, kann das Behältnis mit mehreren im Aufnahmeraum verteilt angeordneten Transpondern versehen sein. Dies bietet insbesondere besondere Vorteile im Zusammenhang mit einer Behältnisgestaltung, bei welcher die Artikel in vorgegebenen Aufnahmepositionen im Behältnis untergebracht werden. Entsprechend einer solchen Aufteilung des Aufnahmeraumes in einzelne Aufnahmepositionen angeordnete Transponder können z. B. zur Erfassung der Belegung der einzelnen Aufnahmepositionen genutzt werden. Mit einem RFID-System kann dann neben einer Identifizierung der aufgenommen Artikel auch für jeden identifizierten Artikel dessen Position im Aufnahmeraum erfasst werden. Gemäß einer Realisierungsvariante dieses Konzepts ist vorgesehen, dass für jede vorgegebene Aufnahmeposition ein Transponder im Aufnahmeraum angeordnet ist, der im Falle eines aufgenommenen Artikels in der betreffenden Position durch diesen Artikel funktechnisch abgeschirmt wird.

In einer Ausführungsform sind die aufzunehmenden Artikel elektrische bzw. elektronische Geräte.

Solche Geräte können beispielsweise innerhalb des Behältnisses elektrisch miteinander verbindbar sein (z. B. zur Energieversorgung und/oder für einen Datenaustausch).

Bei den aufzunehmenden Artikeln kann es sich z. B. um IT (Informationstechnologie)-Geräte handeln, beispielsweise um Netwerkkomponenten wie so genannte Blades, Switches, Routers, Patchfelder etc., oder um Telekommunikationsgeräte, bzw. Elektrokomponenten für die Gebäudeinstallation (z. B. Steuergeräte, Trafos, Sicherungen, Verbrauchszähler, Verteilerfelder, Solarstromanlagenkomponenten etc.).

Derartige Geräte zur Verwendung in der Informationstechnik, Telekommunikationstechnik und/oder Elektroinstallationstechnik für Gebäude werden üblicherweise in speziellen "Racks" oder Aufnahmeschränken (z. B. Schaltschränke für Elektroinstallationstechnik) untergebracht und verkabelt. Durch eine eher geringfügige und somit einfache Modifikation lassen sich Racks und Schränke gemäß der Erfindung realisieren. Damit kann in vorteilhaft einfacher und zuverlässiger Weise z. B. eine Inventarisierung betreffend die in einer Organisation vorhandenen Geräte vorgenommen werden.

In einer Ausführungsform bildet wenigstens ein Teil der RFID-Antenneneinrichtung gleichzeitig ein Element, beispielsweise ein tragendes Element, einer mechanischen Behältnisstruktur. Beispielsweise kann eine lang gestreckte Strebe oder ein flächig ausgedehntes Seitenteil (z. B. Seitenwand oder Bodenwand oder oberseitige Wand) als RFID-Antenne ausgebildet und genutzt sein.

Die Antenneneinrichtung kann z. B. eine Stabantenne oder eine flächig ausgedehnte Antenne ("Patchantenne") umfassen.

Bei einem im Wesentlichen quaderförmigen Behältnis können seitliche, obere und untere Wandungsabschnitte einer mechanischen Behältnisstruktur vorteilhaft als Patchantennen genutzt werden.

Auch können an einer Behältniswand integrierte (eingelassene) Spulenwindungen als Antenne (für eine induktive Kopplung zum Transponder) fungieren.

In einer Ausführungsform umfasst die RFID-Antenneneinrichtung mehrere Antennen. Eine solche Mehrzahl von Antennen kann gleichzeitig betrieben werden, oder z. B. über eine geeignete Multiplexeinrichtung gleichzeitig oder sequentiell betrieben werden.

In einer Ausführungsform ist vorgesehen, dass das Behältnis und/oder ein Artikel ferner eine Sensoreinrichtung aufweist.

Die Sensoreinrichtung kann insbesondere einen Sensor zur Erfassung wenigstens einer physikalischen Größe im Aufnahmeraum umfassen. Als physikalische Größen kommen beispielsweise eine Luftfeuchtigkeit, eine Temperatur, eine Gaskonzentration etc. in Betracht. Derartige Größen einschließlich ihrer zeitlichen Entwicklung können insbesondere dann von großer Bedeutung sein, wenn das Behältnis zur Lagerung und/oder zum Transport der darin aufgenommenen Artikel verwendet wird. Die konkrete Art von zweckmäßigen Sensoren ergibt sich letztlich aus der Art der betreffenden Artikel.

Im Rahmen der Erfindung können Erfassungsergebnisse der Sensoreinrichtung beispielsweise über die oben bereits erwähnte elektrische Anschlusseinrichtung an eine externe Einrichtung übermittelt werden. In diesem Fall kann z. B. eine Steckverbindungseinrichtung vorgesehen sein, über welche sowohl die Antenneneinrichtung betrieben als auch die Sensordaten übermittelt werden.

Als eine solche externe Einrichtung, an welche Sensordaten übermittelt werden, kann z. B. im Falle eines Transportbehältnisses (z. B. Seefrachtcontainer) insbesondere eine so genannte "elektronische Plombe" vorgesehen sein. Letztere kann beispielsweise in erster Linie dazu vorgesehen sein, ein Öffnen und Schließen bzw. entsprechende Zeitpunkte hierfür zu erfassen und zu speichern. Im Rahmen der Erfindung ist jedoch eine zusätzliche Speicherung von Sensordaten (z. B. Temperatur, Schock, Vibration etc.) besonders interessant. Im Rahmen der Erfindung kann eine solche elektronische Plombe zusätzlich die Funktion des "RFID-Lesegerätes" besitzen.

Außerdem ist es denkbar, dass die aufzunehmenden Artikel selbst bzw. deren Transponder eine Sensoreinrichtung zur Erfassung von physikalischen Größen aufweisen. In diesem Fall können die Sensordaten gleichzeitig mit der Identifikation der einzelnen Transponder von dem RFID-Lesegerät erfasst werden.

Eine besonders bevorzugte Verwendung des erfindungsgemäßen RFID-Systems bzw. - Verfahrens ist die automatische Identifikation von Gütern oder Waren, insbesondere z. B. im Bereich der Beschaffungs- und Distributionslogistik, im Handel, in Produktionsbetrieben oder anderen Materialflusssystemen.

Vorteilhaft lässt sich die Erfindung in die Fördertechnik im Bereich Produktion und/oder Logistik integrieren und kann in jeweils speziell angepassten Varianten eingesetzt werden (z. B. auch im Transportwesen).

Eine weitere besonders bevorzugte Verwendung der Erfindung ergibt sich im Bereich der Fahrzeugtechnik. Bei dem erfindungsgemäßen RFID-System kann das Behältnis beispielsweise eine mechanische Struktur, insbesondere ein Chassis, eines Fahrzeuges sein, wobei die darin aufzunehmenden Artikel von Fahrzeugkomponenten gebildet werden, die im Fahrzeug installiert sind. Beispielsweise kann mit einem RFID-System dieser Art eine Erfassung von Komponenten im Motorraum eines Personenkraftwagens realisiert werden (z. B. Bremsbacken, Lichtmaschine, Hydraulikpumpe, Luftfilter, Schläuche etc.).

In einer Weiterbildung ist vorgesehen, dass das Lesegerät zum Identifizieren der im Fahrzeug installierten Fahrzeugkomponenten einen Teil einer ohnehin vorhandenen Fahrzeugelektronik darstellt (Datenauslesung z. B. durch Werkstattpersonal).

Ein RFID-System gemäß der Erfindung umfasst wenigstens ein Behältnis der vorstehend erläuterten Art und wenigstens ein Lesegerät zum Identifizieren der im Behältnis befindlichen Transponder. In einer Weiterbildung des RFID-System in ein Netzwerk einer Datenverarbeitungseinrichtung eingebunden.

### Kurzbeschreibung der Zeichnungen

Die Erfindung wird nachfolgend anhand von Ausführungsbeispielen mit Bezug auf die beigefügten Zeichnungen weiter beschrieben. Es stellen jeweils schematisch dar:
- Fig. 1: eine Draufsicht eines Server-Racks gemäß eines ersten Ausführungsbeispiels,
- Fig. 2: eine Vorderansicht des Server-Racks,
- Fig. 3: eine Draufsicht eines Server-Racks gemäß eines weiteren Ausführungsbeispiels,
- Fig. 4: eine Vorderansicht des Server-Racks,
- Fig. 5: eine Draufsicht eines Server-Racks gemäß eines weiteren Ausführungsbeispiels,
- Fig. 6: eine Vorderansicht des Server-Racks,
- Fig. 7: eine Anschlusskonfiguration zum Anschluss mehrerer Behältnisse an ein gemeinsames RFID-Lesegerät,
- Fig. 8: eine Anschlusskonfiguration zum Anschluss von mit mehreren Antennen versehenden Behältnissen an ein RFID-Lesegerät,
- Fig. 9: ein RFID-System zur kontinuierlichen Erfassung des Inventars einer EDV-Abteilung in einem Unternehmen,
- Fig. 10: eine zur Ausbildung einer Patchantenne modifizierte Behältniswand,
- Fig. 11: eine zur Ausbildung mehrerer Patchantennen modifizierte Behältniswand,
- Fig. 12: ein RFID-System für gestapelte Behältnisse,
- Fig. 13: ein mit einem RFID-System ausgestattetes Fahrzeug gemäß eines Ausführungsbeispiels,
- Fig. 14: ein Fahrzeug gemäß eines weiteren Ausführungsbeispiels, und
- Fig. 15: ein Fahrzeug gemäß eines weiteren Ausführungsbeispiels.

### Beschreibung der bevorzugten Ausführung(en)

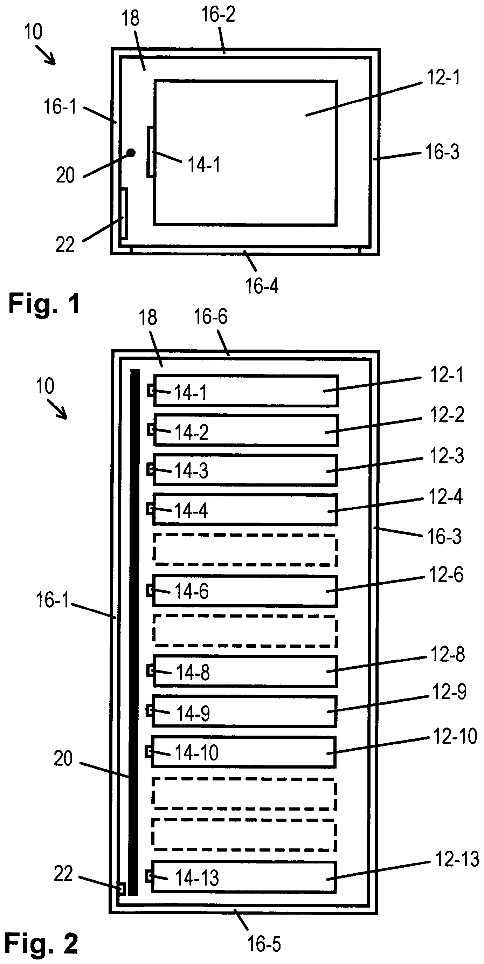

Die Fig. 1 und 2 sind eine Draufsicht bzw. eine Vorderansicht eines Behältnises 10 in Form eines so genannten "Server-Racks" zur Unterbringung von Artikeln 12-1 bis 12-13 in Form von IT-Komponenten (z. B. Patchfelder, Blades, Switches etc.).

Die Bezugszahlen von mehrfach vorgesehenen, in ihrer Wirkung jedoch analogen Komponenten, wie z. B. die in den Fig. 1 und 2 ersichtlichen Artikel, sind durchnummeriert (jeweils ergänzt durch einen Bindestrich und eine fortlaufende Zahl). Auf einzelne solcher Komponenten oder auf die Gesamtheit solcher Komponenten wird im Folgenden auch durch die nicht-ergänzte Bezugszahl Bezug genommen.

Die Artikel 12 sind jeweils mit einem RFID-Transponder 14 ("RFID-Tag") versehen, in welchem artikelspezifische Daten wie z. B. die Art des Artikels, eine Seriennummer, eine Inventarnummer etc. gespeichert sind und mittels RFID ausgelesen (und gegebenenfalls auch verändert) werden können.

Das Behältnis 10 besitzt eine mechanische Behältnisstruktur bestehend aus einer äußeren Gehäusestruktur und einer inneren Tragstruktur.

Die Gehäusestruktur besteht im dargestellten Beispiel im Wesentlichen aus metallischen Wänden 16-1 bis 16-6, welche einen Aufnahmeraum 18 zur Unterbringung der Artikel 12 begrenzen (im dargestellten Beispiel vollständig umschließen). Die vordere Wand 16-4 ist als aufschwenkbare Türe ausgebildet, um einen Zugang zum Aufnahmeraum 18 zu schaffen. Der Deutlichkeit der Darstellung halber ist in Fig. 1 eine oberseitige Wand 16-6 weggelassen und in Fig. 2 die vordere Wand (Türe) 16-4 weggelassen.

Nach einem Öffnen der Tür bzw. Wand 16-4 können Artikel 12 in das Behältnis 10 hineingebracht oder herausgenommen werden.

Die innere Tragstruktur des Behältnisses 10 ist der Einfachheit der Darstellung halber nicht detailliert dargestellt. Sie dient zur mechanischen Stabilisierung der Gesamtkonstruktion und besitzt Haltemittel oder bildet solche Haltemittel aus, die eine sichere Befestigung der im Behältnis 10 untergebrachten Artikel 12 ermöglichen (z. B. durch eine Verschraubung).

Wenn es sich bei den Artikeln 12 um elektrische oder elektronische Geräte handelt, wie es im dargestellten Beispiel der Fall ist, so kann die innere Tragstruktur des Behältnisses 10 vorteilhaft auch elektrische Leitungs- und/oder Kontaktierungsmittel bereitstellen, welche eine Energieversorgung und/oder eine elektrische Verbindung der Geräte untereinander vereinfachen.

In Fig. 2 sind beispielhaft vier aktuell nicht verwendete Bereiche des Aufnahmeraumes 18 gestrichelt eingezeichnet.

Behältnisse wie das dargestellte Server-Rack 10 werden in vielen EDV-Abteilungen von Unternehmen verwendet. Auf Grund von mehr oder weniger häufigen Änderungen der EDV-Struktur unterliegt der Inhalt jedes Behältnisses einem stetigen Wandel. Viele Organisationen und Unternehmen verlieren daher rasch den Überblick betreffend das Vorhandensein und die tatsächliche Verwendung (Einbauort) ihrer EDV-Komponenten. Dies verursacht hohe Kosten zur raschen Bereitstellung aktuell benötigter Komponenten und/oder zu einem personellen Mehraufwand für eine regelmäßige Bestandsaufnahme und Aktualisierung von Bestandslisten.

Wenngleich die als solche bekannte RFID-Technik prinzipiell eine automatische Datenerfassung von mit RFID-Transpondern versehenen Artikeln ermöglicht, scheiterte der Einsatz dieser Technik zur Identifizierung von mit RFID-Transpondern versehenen und in Behältnissen der in Fig. 1 und 2 dargestellten Art untergebrachten Artikeln bislang an der abschirmenden Wirkung der metallischen Behältniskonstruktion, in welcher sich die zu detektierenden Artikel samt Transpondern befinden.

Bei dem dargestellten Behältnis 10 ist diese Problematik jedoch in einfacher Weise beseitigt, so dass mittels der RFID-Technik eine zuverlässige Identifizierung der im Behältnis 10 befindlichen Transponder 14 ermöglicht ist.

Eine hierzu wesentliche Besonderheit des Behältnisses 10 besteht darin, dass im Aufnahmebereich 18 eine RFID-Antenne 20 zur Kommunikation mit den Transpondern 14 angeordnet ist. Die Antenne 20 ist in geeigneter Weise (nicht dargestellt) mit einem RFID-Lesegerät verbunden, welches innerhalb des Behältnisses 10 oder auch (bevorzugt) außerhalb des Behältnisses 10 angeordnet sein kann.

Auf Grund der Anordnung der Antenne 20 innerhalb der metallischen Gehäusestruktur beeinträchtigt diese Struktur nicht die funktechnische Kommunikation zwischen Antenne 20 und Transpondern 14.

Der im Stand der Technik nachteilige abschirmende Effekt einer metallischen Gehäusestruktur wird im dargestellten Ausführungsbeispiel in eine Reihe von gravierenden Vorteilen gewandelt. Insbesondere verringert diese Abschirmung nämlich die Gefahr von Beeinträchtigungen der Kommunikation durch externe Störquellen. Außerdem ermöglicht die Abschirmung, ein RFID-System mit mehreren Behältnissen 10 parallel und in räumlicher Nähe zu betreiben, ohne dass die in den einzelnen Behältnissen stattfindenden Kommunikationen sich gegenseitig beeinträchtigen. Damit ist eine eindeutige Zuordnung der erfassten Objekte möglich, die im Falle einer allgemeinen Raumerfassung, wie bislang im Stand der Technik praktiziert, nicht gegeben wäre. Dies löst somit ein grundsätzliches Problem der RFID im Vergleich beispielsweise zum Barcode, wo zum Zeitpunkt der Datenerfassung ein "Sichtkontakt" mit einem einzelnen Objekt besteht, wohingegen bei einer RFID-"Funkerfassung" - ähnlich wie beim öffentlichen Funkverkehr - alle Teilnehmer (Tags) mithören und "ungefragt antworten" können. Dies stellt im Stand der Technik die eindeutige Zuordnung der Objekte in der Realität vor große Probleme.

Auf Grund des relativ geringen Abstands zwischen der Antenne 20 und den Transpondern 14 können sämtliche Komponenten des RFID-Systems einfacher als bislang üblich (für eine längerreichweitige Erfassung) ausgebildet werden. Bei der dargestellten Antenne 20 handelt es sich z. B. um eine Stabantenne, mit der eine sehr einfache kurzreichweitige Datenerfassung realisiert ist.

In einer bevorzugten Ausführungsform wird eine Antenne durch ein Element der ohnehin vorhandenen mechanischen Behältnisstruktur gebildet. Gegebenenfalls erfordert dies eine geringfügige Modifizierung des betreffenden Elements wie z. B. eine elektrische Isolierung von anderen metallischen Behältnisabschnitten. Die in Fig. 2 dargestellte Antenne 20 kann z. B. gleichzeitig eine Versteifungsstrebe der inneren Tragstruktur des Behältnisses 10 bilden. Anders ausgedrückt kann eine solche Versteifungsstrebe, gegebenenfalls nach geringfügiger Modifizierung, als Antenne genutzt werden. Es ist also nicht zwingend erforderlich, dass zur Realisierung des beschriebenen RFID-Verfahrens eine Antenne als "zusätzliche Komponente" separat hergestellt und nachträglich in das Behältnis eingebaut wird.

Ähnlich wie die Artikel 12 ist auch das Behältnis 10 selbst mit einem RFID-Transponder 22 versehen. Der Transponder 22 hält mittels RFID-Technik auslesbare Daten betreffend das Behältnis 10 (z. B. Behältnistyp, Aufnahmeraumkapazität, Inventarnummer etc.) bereit und ist im dargestellten Ausführungsbeispiel innerhalb des abgeschirmten Aufnahmeraumes 18 angeordnet. Somit können die im Transponder 22 gespeicherten Daten mittels einer Kommunikation unter Verwendung der Antenne 20 gelesen oder geschrieben werden. Alternativ könnte der Transponder 22 z. B. derart in eine der Wände 16 integriert werden, dass eine Kommunikation sowohl mit der internen Antenne 20 als auch einer externen Antenne (nicht dargestellt) ermöglicht ist.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

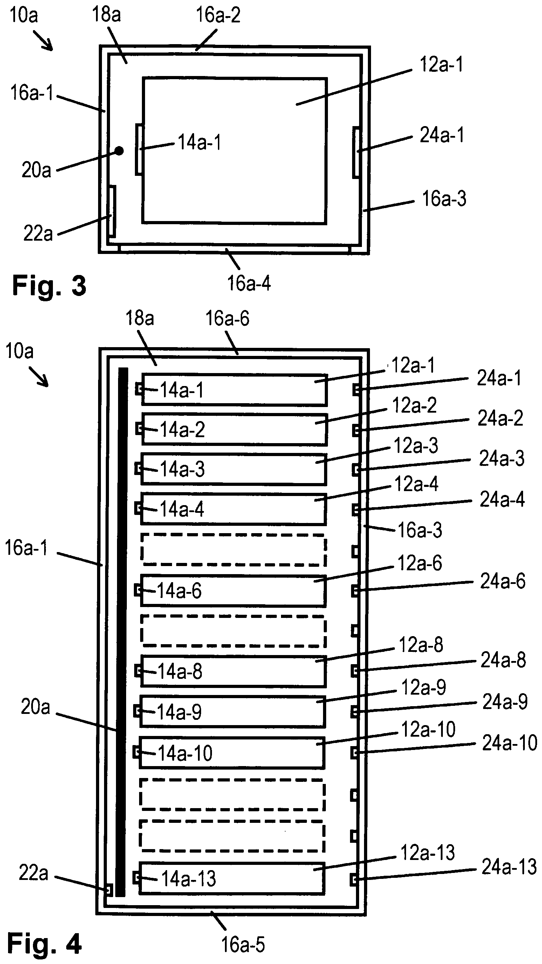

Die Fig. 3 und 4 veranschaulichen ein Behältnis 10a gemäß eines weiteren Ausführungsbeispiels.

Das Behältnis 10a sowie dessen Funktion im Rahmen eines RFID-Systems entsprechen im Wesentlichen dem oben beschriebenen Beispiel gemäß der Fig. 1 und 2.

Eine Besonderheit des Behältnisses 10a besteht jedoch darin, dass die Haltemittel der inneren Tragstruktur fest vorgegebene Aufnahmepositionen für die wahlweise im Aufnahmeraum 18a aufzunehmenden Artikel 12a vorsehen, und dass jeder dieser Aufnahmepositionen zugeordnet jeweilige weitere Transponder 24a-1 bis 24a-13 im Aufnahmeraum 18a angeordnet sind. Die Transponder 24a sind an der Innenseite der rechten Gehäusewand 16a-3 jeweils in einer Höhe angeordnet, welche der betreffenden Aufnahmeposition entspricht. Da die Antenne 20a benachbart einer anderen Gehäusewand (hier: an der entgegengesetzten, also linken Gehäusewand 16a-1) angeordnet ist, behindert jeder in einer bestimmten Aufnahmeposition untergebrachter Artikel 12a die direkte Kommunikation zwischen der Antenne 20a und dem der Aufnahmeposition entsprechenden Transponder 24a. Dies deshalb, weil eine metallische Gehäusestruktur der hier (als elektronische IT-Komponenten) vorgesehenen Artikel 12 eine abschirmende Wirkung für diese Kommunikation besitzt. Mit einer geeigneten Gestaltung der Abschirmwirkung und der RFID-Technik (insbesondere z. B. Strahlungsleistung der Antenne 20a und der Transponder 24a) lässt sich dieser Effekt dazu nutzen, "leere Aufnahmepositionen" innerhalb des Aufnahmeraumes 18a zu erfassen.

In Fig. 4 sind beispielhaft vier solche nicht besetzten Aufnahmepositionen gestrichelt eingezeichnet. Zwischen den diesen Positionen zugeordneten Transpondern 24a-5, 24a-7, 24a-11 und 24a-12 einerseits und der Antenne 20a andererseits kann eine besonders gute Kommunikationsverbindung aufgebaut werden, wohingegen die Kommunikation zwischen den übrigen der Transponder 24a und der Antenne 20a wesentlich schlechter oder überhaupt nicht möglich ist. Dieser Unterschied lässt sich mittels des verwendeten RFID-Lesegeräts leicht feststellen und zur Erfassung der nicht besetzten Aufnahmepositionen und der besetzten Aufnahmepositionen nutzen.

Im dargestellten Beispiel ist nicht vorgesehen, die genauen Positionen der im Aufnahmeraum 18a befindlichen Artikeln 12a zu detektieren. Dies könnte jedoch z. B. dadurch realisiert werden, dass anstatt der sich durchgehend über alle Aufnahmepositionen sich erstreckenden Stabantenne 20a eine entsprechende Mehrzahl von einzelnen Antennen verwendet wird (eine für jede zu detektierende Aufnahmeposition).

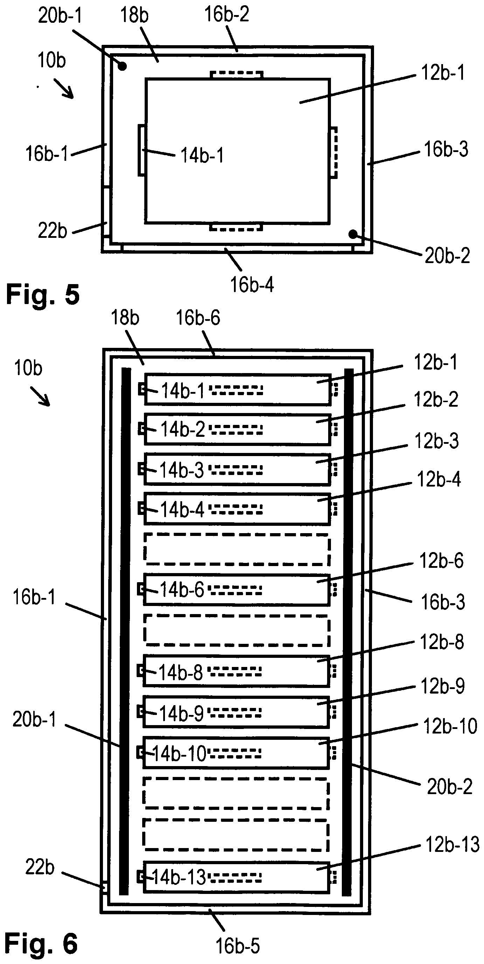

Die Fig. 5 und 6 veranschaulichen einige mögliche Abwandlungen der bis hierher beschriebenen Server-Racks 10 und 10a, nämlich hinsichtlich der konkreten Anordnung einer RFID-Antenneneinrichtung im Inneren des Behältnisses und der RFID-Transponder an den unterzubringenden Artikeln.

Bei dem dargestellten Behältnis 10b umfasst die RFID-Antenneneinrichtung zwei Antennen 20b- 1 und 20b-2, die von oben betrachtet in einander entgegengesetzten Randbereichen des Aufnahmeraumes 18b angeordnet sind. Insbesondere für eine relativ kurze "Lesereichweite" (z. B. einige cm) kann durch eine solche Anordnung mehrerer Antennen die Zuverlässigkeit der Kommunikation verbessert werden. Ferner ergibt sich eine größere Gestaltungsfreiheit hinsichtlich der Anordnung von Transpondern 14b an den einzelnen Artikeln 12b. In den Fig. 5 und 6 gestrichelt eingezeichnet sind z. B. alternative Positionen für die den Artikeln 12b zugeordneten Transponder 14b.

Insbesondere bei Verwendung von mehreren Antennen, wie z. B. bei dem Behältnis 10b, ist die genaue Anordnung der Transponder 22b nicht kritisch. Diese Anordnung der Transponder 22b muss somit nicht fest vorgegeben sein sondern kann von Artikel zu Artikel auch variieren (vgl. gestrichelt einzeichnete Transponderpositionen).

Außerdem ist bei dem Behältnis 10b eine oben schon erwähnte Anordnung des den Behälter 10b selbst kennzeichnenden Transponders 22b derart gewählt, dass zu diesem Transponder auch ausgehend von einer externen RFID-Antenne eine Verbindung aufgebaut werden kann.

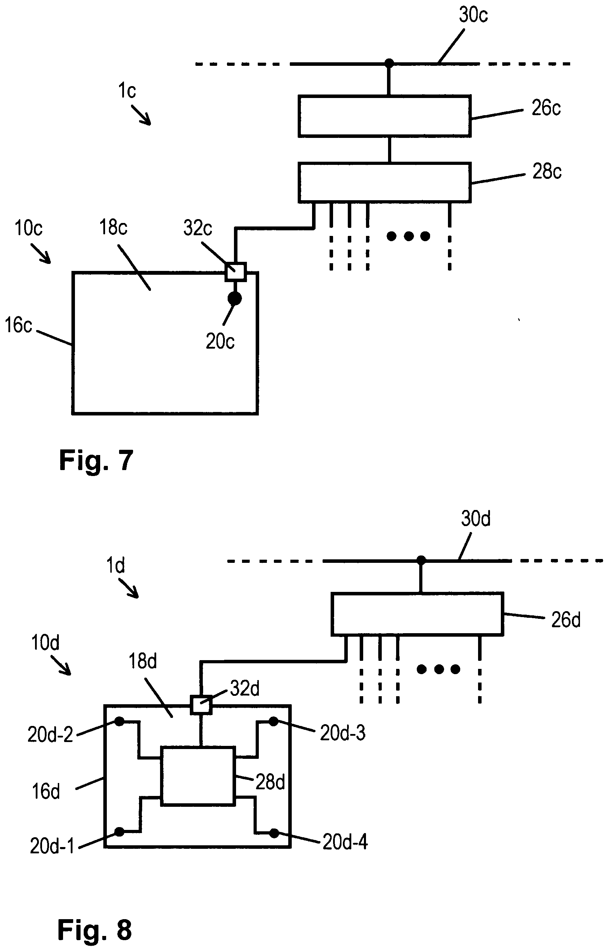

Fig. 7 veranschaulicht eine Anschlusskonfiguration eines RFID-Systems 1c, bei welchem mit einem Lesegerät 26c der Inhalt von mehreren Behältnissen identifiziert werden kann. In der Figur ist eines dieser Behältnisse eingezeichnet und mit 10c bezeichnet. Dieses Behältnis kann z. B. ein Behältnis der oben mit Bezug auf die Fig. 1 bis 6 bereits beschriebenen Art sein.

Das Lesegerät 26c ist hierfür über eine Leitungsverbindung mit einer Multiplexeinrichtung 28c verbunden, die wiederum über mehrere Leitungsverbindungen elektrisch mit den einzelnen Behältnissen wie dem Behältnis 10c verbunden ist.

Mit der dargestellten Konfiguration kann beispielsweise ein Zeitmultiplexverfahren bewerkstelligt werden, bei welchem die Antennen der daran angeschlossenen Behältnisse zeitlich aufeinanderfolgend für eine RFID-Kommunikation betrieben werden. Die von dem Lesegerät 26c ermittelten Daten betreffend den Inhalt der einzelnen Behältnisse und gegebenenfalls betreffend die Behältnisse selbst werden bei der dargestellten Konfiguration an ein Computerbussystem 30c (Netzwerk) weitergegeben, an welchem das Lesegerät 26c angeschlossen ist.

Das Lesegerät 26c und die Multiplexeinrichtung 28c könnten auch baulich zusammengefasst sein, so dass ein Lesegerät resultiert, welches in einem Multiplexverfahren in der Lage ist, mehrere über eine Leitungsverbindung angeschlossene RFID-Antennen zu betreiben.

Mit der Bezugszahl 32c ist eine elektrische Anschlusseinrichtung (z. B. Steckbuchse) bezeichnet, welche eine Wand der Gehäusestruktur 16c durchsetzend die Kontaktierung der im Inneren des Behältnisses 10c angeordneten Antenne 20c gestattet. Bei dieser Anschlusseinrichtung 32c kann es sich um eine "Verbundeinrichtung" handeln, welche nicht nur zum Anschluss der RFID-Antenne(n) sondern auch zur elektrischen Kontaktierung irgendwelcher anderer Komponenten des Behältnisses 10c dient. Wenn das Behältnis 10c beispielsweise zur Unterbringung von Artikeln in Form von elektrischen oder elektronischen Geräten vorgesehen ist, so können diese Geräte ebenfalls über die Anschlusseinrichtung 32c kontaktiert werden (z. B. zum Anschluss an ein elektrisches Energieversorgungsnetz und/oder an ein Datenübertragungsnetz).

Fig. 8 zeigt eine Abwandlung der mit Bezug auf die Fig. 7 beschriebenen Konfiguration, bei welcher ein Lesegerät 26d mit Anschlussmöglichkeiten für mehrere Antennen verwendet wird.

An den einzelnen Anschlüssen des Mehrfach-Lesegerätes 26d kann jeweils eine Antenne angeschlossen werden. Bei einem in Fig. 8 eingezeichneten Behältnis 10d sind im Aufnahmeraum 18d vier Antennen 20d-1 bis 20d-4 vorgesehen, die jedoch nicht einzeln über eine Leitungsverbindung mit dem Lesegerät 26d verbunden sind sondern mit einer Multiplexeinrichtung 28d verbunden sind, welche an oder in dem Behältnis 10d integriert ist. Die Multiplexeinrichtung 28d wiederum ist mit dem Lesegerät 26d verbunden.

Eine elektrische Anschlusseinrichtung 32d, wie auch die oben erwähnte Anschlusseinrichtung 32c (Fig. 7) ist bevorzugt als elektrische Steckverbindungseinrichtung ausgebildet.

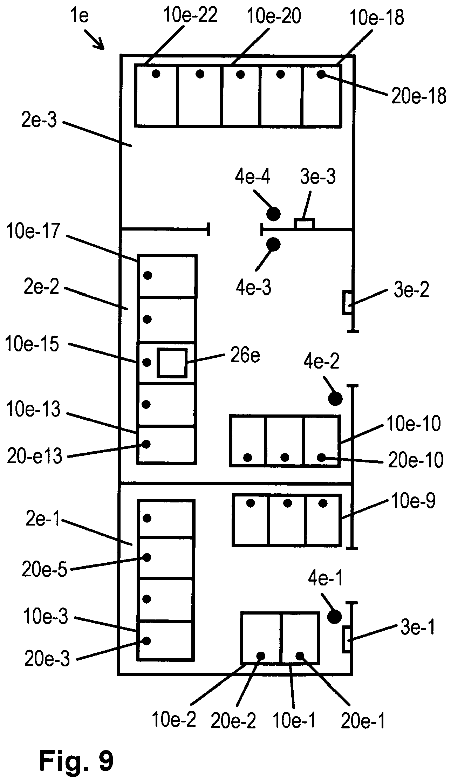

Fig. 9 veranschaulicht ein RFID-System 1e zur automatischen Erfassung des IT-Inventars in EDV-Räumen 2e-1, 2e-2 und 2e-3 eines Unternehmens.

Jeder der Räume 2e ist mit einem den jeweiligen Raum kennzeichnenden Transponder 3e-1, 3e-2 bzw. 3e-3 versehen. Ferner sind über die Räume 2e verteilt mehrere RFID-Antennen 4e-1 bis 4e-4 angeordnet, welche in nicht näher dargestellter Weise mit einem zentralen RFID-Lesegerät 26e verbunden sind und beispielsweise mit den genannten Transpondern 3e-1 bis 3e-3 kommunizieren können.

In den Räumen verteilt angeordnet ist eine Vielzahl von EDV-Schränken 10e-1 bis 10e-18, in welchen die IT-Komponenten einer größeren EDV-Anlage untergebracht sind. Die einzelnen Behältnisse 10e können z. B. jeweils so ausgebildet sein, wie oben mit Bezug auf die Fig. 1 bis 8 bereits beschrieben. Insbesondere ist in einem Aufnahmeraum jedes der Behältnisse 10e jeweils wenigstens eine RFID-Antenne 20e angeordnet, um in der oben bereits beschriebenen Weise mit denjenigen Transpondern zu kommunizieren, die an oder in den Artikeln (IT-Komponenten) angebracht sind, die sich in den Behältnissen 10e befinden.

Der Einfachheit der Darstellung halber ist die Verbindung zwischen den einzelnen Antennen 20e-1 bis 20e-18 sowie der weiteren Antennen 4e-1 bis 4e-4 einerseits und dem zentralen Lesegerät 26e andererseits nicht eingezeichnet. Insbesondere vor dem Hintergrund der vorangegangenen Beschreibung ist klar, dass es hierfür in der Praxis zahlreiche Möglichkeiten gibt. Beispielsweise können eine oder mehrere Multiplexeinrichtungen vorgesehen sein, um die Vielzahl von Antennen mit dem Lesegerät 26e zu verbinden, wobei solche Multiplexeinrichtungen innerhalb oder außerhalb der Behältnisse 10e angeordnet sein können. Beispielsweise könnte vorgesehen sein, dass in jedem der drei Räume 2e-1 bis 2e-3 jeweils eine separat angeordnete Multiplexeinrichtung mit den betreffenden Antennen (jeweils eines Raumes) verbunden ist und diese Multiplexeinrichtungen jeweils über eine gebäudefeste Verkabelungsanlage mit dem Lesegerät 26e verbunden sind.

Bei der dargestellten Konfiguration ist es zweckmäßig, gegebenenfalls vorgesehene Transponder, welche die einzelnen Behältnisse 10e kennzeichnen, so an den einzelnen Behältnissen 10e anzubringen, dass diese durch die jeweilige der Raumantennen 4e erfasst werden können. Mittels dieser Antennen 4e kann somit erfasst werden, wie viele und welche Behältnisse sich in jedem der Räume befinden. Die innerhalb der Behältnisse 10e angeordneten Antennen 20e dienen zur Erfassung der einzelnen Inhalte der Behältnisse 10e. Die externen Antennen 4e-1 bis 4e-2 können darüber hinaus dazu verwendet werden, im Betrieb des RFID-Systems 1e Ortsveränderungen einzelner Artikel (IT-Komponenten) und einzelner Behältnisse zu detektieren.

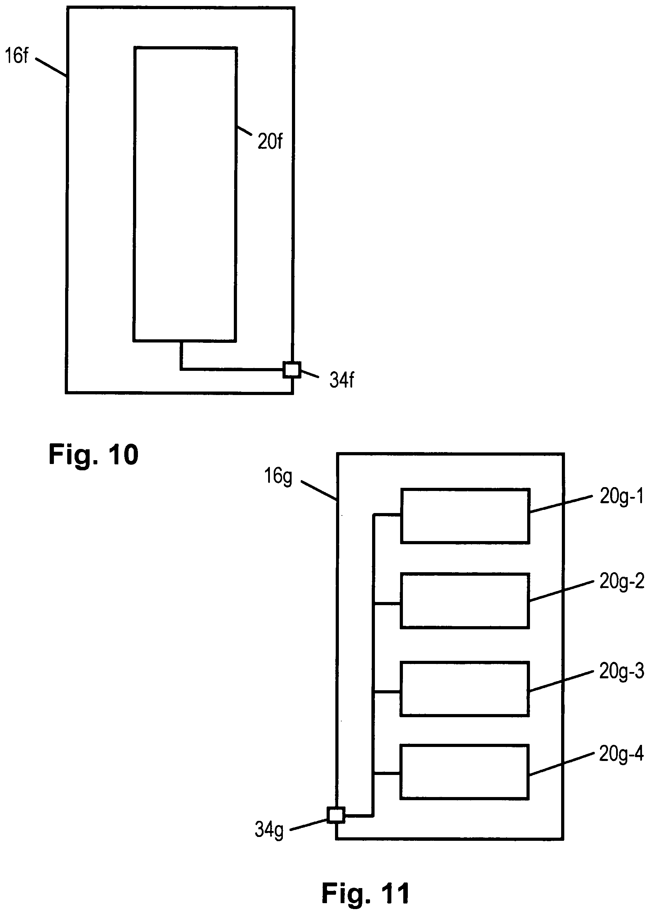

Die Fig. 10 und 11 veranschaulichen beispielhaft eine Integration von flächig ausgedehnten, so genannten Patchantennen in zum Aufbau von erfindungsgemäßen Behältnissen vorgesehene Seitenwände.

Fig. 10 zeigt eine Seitenwand 16f mit einer im mittleren Bereich davon integrierten Patchantenne 20f.

Fig. 11 zeigt eine Wand 16g mit daran oder darin integrierten Patchantennen 20g-1 bis 20g-4.

Die dargestellten Antennen 20f bzw. 20g-1 bis 20g-4 sind jeweils über eine ebenfalls in der Wand 16f bzw. 16g integrierte elektrische Leitungsanordnung mit einer elektrischen Anschlusseinrichtung 34f bzw. 34g verbunden. Diese Anschlusseinrichtung kann z. B. zur Weiterkontaktierung (etwa zu anderen Behältniskomponenten hin) oder zur externen Verkabelung des Behältnisses dienen.

Bei dem in Fig. 11 veranschaulichten Beispiel werden die Antennen 20g-1 bis 20g-4 simultan betrieben. Abweichend davon kommt auch in Betracht, zwischen der Anschlusseinrichtung 34g einerseits und den vier Antennen 20g-1 bis 20g-4 andererseits eine Multiplexeinrichtung der oben bereits erläuterten Art einzufügen, oder für jede der vier Antennen eine separate Leitung zur Anschlusseinrichtung verlaufen zu lassen.

Die in den Fig. 10 und 11 dargestellten Wände 16f und 16g können z. B. als Ersatz für eine entsprechend dimensionierte Wand eines herkömmlichen Behältnisses verwendet werden, um dieses Behältnis gemäß der vorliegenden Erfindung zu modifizieren.

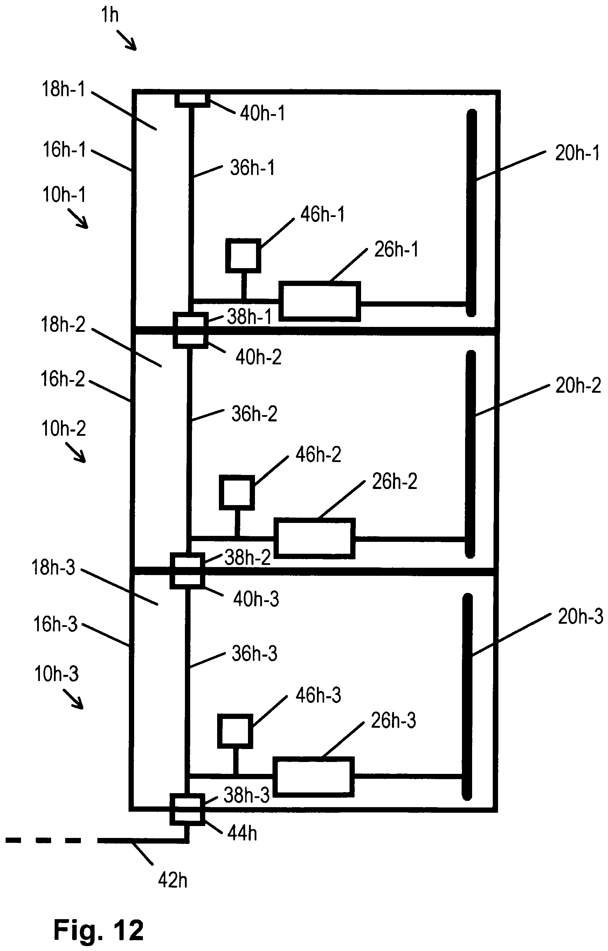

Bis hierher wurden Ausführungsbeispiele von RFID-Behältnissen und RFID-Systemen beschrieben, welche eines oder mehrere Behältnisse der erläuterten Art umfassen. Nachfolgend werden mit Bezug auf die Fig. 12 bis 14 einige Ausführungsbeispiele beschrieben, die sich insbesondere dem Aspekt der RFID-Technik zur Identifizierung der Inhalte mehrerer Behältnisse widmen.

Fig. 12 veranschaulicht wesentliche Komponenten eines RFID-Systems 1h umfassend mehrere (hier z. B. 3) Behältnisse 10h-1, 10h-2 und 10h-3, deren Inhalte von dem System erfasst werden sollen. Die Behältnisse 10h sind wie bei den oben bereits erläuterten Beispielen jeweils zur wahlweisen Aufnahme von Artikeln vorgesehen, die mit geeigneten RFID-Transpondern versehen sind. Der Einfachheit der Darstellung halber sind in Fig. 12 solche Artikel und deren Transponder nicht dargestellt.

Eine erste Besonderheit der Behältnisse 10h besteht darin, dass diese eine äußere mechanische Gehäusestruktur 16h besitzen, welche ein (vertikales) Stapeln und/oder ein (horizontales) Aneinanderreihen mehrerer Behältnisse 10h erlaubt. In Fig. 12 ist beispielhaft ein Stapel aus den drei gleichartigen Behältnissen 10h-1, 10h-2 und 10h-3 dargestellt.

Eine weitere Besonderheit der Behältnisse 10h besteht darin, dass allein durch das Stapeln und/oder Aneinanderreihen der Behältnisse eine elektrische Kontaktierung der Behältnisse miteinander zur Ausbildung einer entlang des ganzen Stapels bzw. entlang der ganzen Aneinanderreihung sich erstreckenden elektrischen Leitungsanordnung erfolgt.

Im dargestellten Beispiel besteht diese Leitungsanordnung aus jeweils innerhalb der Behältnisse 10h verlaufenden Leitungsabschnitten 36h-1, 36h-2 und 36h-3.

Da die drei Behältnisse 10h in diesem Beispiel identisch ausgebildet sind, wird nachfolgend lediglich das in Fig. 12 unterste Behältnis 10h-3 detaillierter beschrieben.

Der im Behältnis 10h-3 vorgesehene Leitungsabschnitt 36h-3 verläuft ausgehend von einer Steckverbindungseinrichtung 38h-3 an einer Seite (hier: Unterseite) des Behältnisses 10h-3 zu einer Gegensteckverbindungseinrichtung 40h-3 an der entgegengesetzten Seite (hier: Oberseite) des Behältnisses 10h-3. Die Einrichtungen 38h-3 und 40h-3 sind korrespondierend zueinander ausgebildet, etwa als elektrischer Stecker und dazu passende Buchse. Damit ist klar, dass durch die Stapelung mehrerer solcher Behältnisse eine in der Stapelrichtung durchgehende Leitungsanordnung gebildet wird. Die Verlaufsrichtung des Leitungsabschnitts 36h entspricht hierbei der vorgesehenen (vertikalen) Stapelrichtung. Abweichend vom dargestellten Beispiel könnte der Leitungsabschnitt auch z. B. horizontal entsprechend einer horizontalen Aneinanderreihung verlaufen. Schließlich könnten in jedem der Behältnisse 10h auch mehrere, in verschiedene Richtungen verlaufende Leitungsabschnitte vorgesehen sein (entsprechend mehreren verschiedenen möglichen Stapelrichtungen).

Im dargestellten Beispiel bilden die Leitungsabschnitte 36h einen Datenübertragungsbus, beispielsweise eines im Bereich der Computertechnik gängigen Standards. Zum Anschluss dieses Busses an einen Computer bzw. ein Computernetzwerk wird an eine der Steckverbindungseinrichtungen und Gegensteckverbindungseinrichtungen ein entsprechendes Datenübertragungskabel (Netzwerkkabel) 42h angeschlossen, welches an seinem Ende mit einer passenden Gegensteckverbindungseinrichtung bzw. Steckverbindungseinrichtung 44h versehen ist. Da im dargestellten Beispiel das Datenübertragungskabel 42h mit der Einrichtung 44h an der Unterseite des Behältnisses 10h-3 mit der Steckverbindungseinrichtung 38h-3 kontaktiert wird, muss diese Einrichtung 44h genauso wie die Gegensteckverbindungseinrichtungen 40h ausgebildet sein.

Das RFID-Verfahren zur Identifizierung der in den Behältnissen 10h befindlichen Transponder erfolgt, wie oben für die anderen Beispiele bereits beschrieben, mit Hilfe der in jeweiligen Aufnahmeräumen 18h-1, 18h-2 und 18h-3 angeordneten RFID-Antennen 20h-1, 20h2 und 20h-3.

Die Antennen 20h sind jeweils mit einem ebenfalls im Inneren des betreffenden Behältnisses 10h angeordneten RFID-Lesegerät 26h-1, 26h-2 bzw. 36h-3 verbunden, welches die Kommunikation zwischen den Antennen und den Transpondern bewerkstelligt und mit dem betreffenden Leitungsabschnitt 36h des Datenübertragungsbusses verbunden ist, um Lesedaten und gegebenenfalls Schreibdaten mit dem Computernetzwerk auszutauschen.

Abweichend vom dargestellten Ausführungsbeispiel könnte auch ein gemeinsames, extern vom Stapel angeordnetes Lesegerät zum gemeinsamen Betreiben sämtlicher Antennen 20h vorgesehen sein. In diesem Fall könnten die Leitungsabschnitte 36h z. B. als HF-Leitungsabschnitte ausgebildet sein. Eine solche Abwandlung besitzt in der Praxis jedoch das Problem, dass auf Grund der unbekannten Stapelhöhe bzw. Anzahl an gestapelten bzw. aneinandergereihten Behältnissen 10h die HF-technische Anpassung der einzelnen Antennen Schwierigkeiten bereitet.

Bei der in Fig. 12 dargestellten Ausführungsform mit in den Behältnissen 10h integrierten Lesegeräten 26h erfolgt die Energieversorgung dieser Lesegeräte bevorzugt ebenfalls mit Hilfe der durch Stapelung bzw. Aneinanderreihung der Behältnisse 10h gebildeten elektrischen Leitungsverbindung, die zu diesem Zweck einzelne Energieversorgungsleitungen neben den zur Datenübertragung vorgesehenen Leitungen aufweisen kann.

Anhand des Beispiels gemäß Fig. 12 sei noch eine weitere Besonderheit erläutert, die bei allen hier beschriebenen RFID-Behältnissen vorteilhaft eingesetzt werden kann. Es handelt sich hierbei um die Integration einer Sensoreinrichtung im Bereich des Behältnisses.

Jedes der Behältnisse 10h ist ferner mit einer innerhalb des Aufnahmeraumes 18h angeordneten Sensoreinrichtung 46h ausgestattet. Die Energieversorgung sowie die Weitergabe von Sensordaten ist wie für die Lesegeräte 26h dadurch bewerkstelligt, dass die Sensoreinrichtungen 46h jeweils am Datenübertragungsbus angeschlossen sind. Abweichend von der in Fig. 12 symbolisierten Ausgestaltung könnten die Sensoreinrichtungen 46a auch baulich zusammengefasst mit den Lesegeräten 26h vorgesehen sein.

Der Zweck der Sensoreinrichtungen 46h ist es, je nach Anwendungsfall interessierende physikalische Größen zu detektieren, insbesondere im Aufnahmeraum 18h gemessene Größen (z. B. Temperatur, Luftdruck, Luftfeuchtigkeit, Erschütterungen, Vibrationen etc.). Die Sensoreinrichtungen 46h können hierfür mit entsprechenden Sensoren ausgestattet oder mit solchen Sensoren verbunden sein.

Die parallel zur Identifizierung von Transpondern und somit der Inhalte der einzelnen Behälter 10h ermöglichte Erfassung von Umgebungsbedingungen, denen die Artikel ausgesetzt sind, ist insbesondere im Bereich der Lagerung und/oder des Transportes von Gütern vorteilhaft. Wenn die Behältnisse 10h beispielsweise als Frachtcontainer verwendet werden, wie sie z. B. im Bereich des internationalen Warenverkehrs üblich sind, so kann mittels des RFID-Systems 1 h nicht nur das Einbringen, das Ausbringen und der aktuelle Bestand an Gütern selektiv für jeden einzelnen Container erfasst bzw. überwacht werden, sondern es kann auch eine stetige Überwachung der Umgebungsbedingungen der in den Containern gelagerten und/oder transportierten Artikel erfolgen. Damit ist nicht nur eine automatische und bedienderlose und somit einfache Inventarisierung und Aktualisierung von Inventardaten möglich, sondern auch eine effektive Überwachung hinsichtlich schädlicher Umgebungsbedingungen während der Lagerung und/oder des Transportes.

In einer Weiterbildung kann vorgesehen sein, dass die Behältnisse 10h jeweils mit einer elektronischen Speichereinrichtung zur Zwischenspeicherung von RFID-Lese- bzw. Schreibdaten und/oder von Sensordaten ausgestattet sind, um bei einem nicht kontinuierlich durchgeführten RFID-Verfahren "zeitliche Überwachungslücken" zu überbrücken. Bei dem Beispiel von Fig. 12 könnte eine derartige Speichereinrichtung z. B. zwischen den Leitungsabschnitten 36h einerseits und den Lesegeräten 26h und Sensoreinrichtungen 46h andererseits angeordnet oder in einer oder beiden der letzteren Einrichtungen integriert vorgesehen sein.

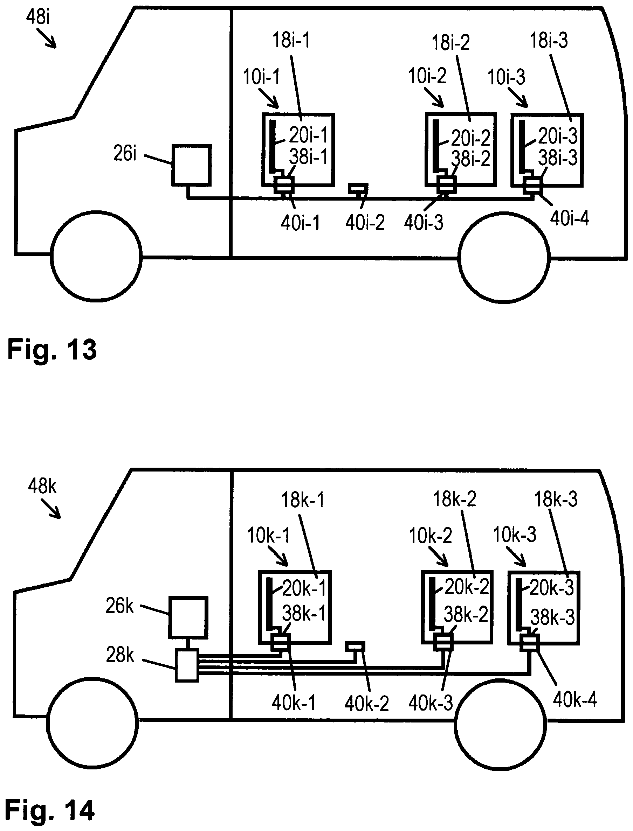

Fig. 13 veranschaulicht eine Verwendung von RFID-Behältnissen 10i als Transportbehältnisse, die in dedizierte Aufnahmebereiche an Bord eines Fahrzeugs anordenbar sind. Fig. 13 veranschaulicht dies am Beispiel eines Kraftfahrzeuges 48i, in dessen Laderaum vier Ladebuchten zur Unterbringung von vier hinsichtlich ihrer äußeren Gehäusestruktur angepassten Behältnissen 10i vorgesehen sind.

In Fig. 13 sind drei solche Behältnisse 10i-1, 10i-2 und 10i-3 tatsächlich im Laderaum des Fahrzeuges 48i aufgenommen. Ähnlich wie bei dem Beispiel gemäß Fig. 12 wird allein durch die Anordnung jedes Behältnisses 10i eine automatische elektrische Kontaktierung der betreffenden Behältnisse 10i realisiert. Die Behältnisse sind hierfür an vorgegebener Stelle (hier: an ihrer Unterseite) jeweils mit einer elektrischen Steckverbindungseinrichtung 38i ausgestattet, welche im angeordneten Zustand des Behältnisses einen elektrischen Kontakt zu einer fahrzeugseitigen Gegensteckverbindungseinrichtung 40i herstellt.

Im dargestellten Beispiel dienen die Verbindungseinrichtungen 38i und 40i zur Herstellung einer HF-Verbindung zwischen einem gemeinsam genutzten RFID-Lesegerät 26i und den RFID-Antennen 20i, die in den jeweiligen Aufnahmeräumen 18i der Behältnisse 10i angeordnet sind.

Fig. 14 zeigt ein Fahrzeug 48k, welches gegenüber dem mit Bezug auf die Fig. 13 beschriebenen Fahrzeug 48i geringfügig modifiziert ist.

Bei dem Fahrzeug 48k ist ein fahrzeugseitiges, zur RFID-Erfassung an Behältnissen 10k vorgesehenes Lesegerät 26k mit einer Multiplexeinrichtung 28k verbunden, von welcher separate elektrische Leitungsverbindungen zu jeder einzelnen der Gegensteckverbindungseinrichtungen 40k-1 bis 40k-4 verlaufen.

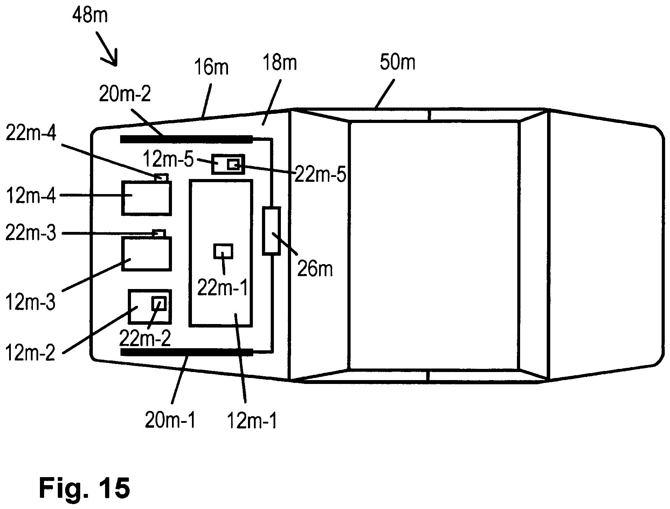

Fig. 15 ist eine schematische Draufsicht eines Kraftfahrzeuges 48m mit einer Karosserie 50m, von welcher vordere Karosseriewandbereiche 16m (z. B. Kotflügel, Lüftergrill, Motorhaube etc.) einen Motorraum 18m mehr oder weniger umschließen. Im Motorraum 18m sind in an sich bekannter Weise eine Vielzahl von Fahrzeugkomponenten fest installiert, insbesondere ein in der Figur schematisch dargestellter Motorblock 12m-1 und weitere Motorkomponenten 12m-2 bis 12m-5. Bei diesen im Raum 18m aufgenommenen Komponenten handelt es sich beispielsweise um Nebenaggregate des Motors 12m-1 (z. B. Kühlmittelpumpe, Lichtmaschine etc.).

In das Fahrzeug 48m integriert ist ein RFID-System, von welchem in der Figur ein RFID-Lesegerät 26m sowie damit über Leitungen angeschlossene Antennen 20m-1 und 20m-2 eingezeichnet sind. Damit können die im Motorraum 18m verbauten und jeweils mit einem RFID-Transponder 22m versehenen Artikel einfach und zuverlässig identifiziert werden. Die "RFID-Tags" an oder in den einzelnen Fahrzeugkomponenten und sonstigen Einbauteilen können die heutzutage üblichen Barcode-Etiketten ersetzen. Anders als bei Bauteilen, die mit einem Barcode versehen sind, können jeweils mit einem RFID-Transponder versehene Bauteile auch im eingebauten Zustand problemlos erfasst, überprüft (z. B. auf Fertigungschargennummern, Typnummern, Echtheit etc.) bzw. inventarisiert werden.

Was die Gestaltung der Antennen 20m des im Fig. 15 dargestellten RFID-Systems anbelangt, so kann auf sämtliche vorstehend und nachfolgend beschriebene Konstruktionen zurückgegriffen werden. Im dargestellten Anwendungsbeispiel könnten beispielsweise Stabantennen oder Patch-Antennen eingesetzt werden, die z. B. auf der Innenseite von metallischen Karosserieteilen (z. B. Kotflügel etc.) angeordnet sind.

In einer Weiterbildung ist vorgesehen, dass das Lesegerät 26m mit einer Bordelektronik (z. B. umfassend einen Bordcomputer) verbunden ist bzw. von einer solchen ohnehin vorhandenen Elektronik versorgt wird. Das Lesegerät 26m kann beispielsweise als eine Fahrzeugelektronikkomponente vorgesehen sein, die an einem Datenbus (z. B. CAN-Bus) angeschlossen ist. Die RFID-Lese/Schreib-Vorgänge als solche und/oder z. B. der Abruf (zwischen)gespeicherter Leseergebnisse können z. B. von Fachpersonal in einer Werkstatt durchgeführt werden.

Neben einer raschen und zuverlässigen Erfassung der eingebauten Komponenten ist das dargestellte bordeigene RFID-System auch hinsichtlich eines Schutzes vor Plagiaten interessant (Die Transponder bzw. deren Funktion können jeweils ein Echtheitsmerkmal der betreffenden Komponente darstellen). Die Erfindung stellt somit auch ein vorteilhaftes Verfahren zur Echtheitsprüfung von Artikeln bereit.

Abweichend vom dargestellten Ausführungsbeispiel könnte das RFID-System des Fahrzeuges 48m auch eine Antenneneinrichtung im Insassenraum und/oder im Laderaum (Kofferraum) umfassen (alternativ oder zusätzlich zu den dargestellten Antennen 20m-1, 20m-2 im Motorraum). Damit könnte vorteilhaft auch eine Erfassung bzw. Identifikation von Innenraumkomponenten bzw. Laderaumkomponenten (fest installiert oder das Ladegut selbst) realisiert werden.

RFID-Antenneneinrichtungen (z. B. eigens vorgesehene Antennen oder modifizierte Innenraumkomponenten) zur Überprüfung des Insassenraumes könnten z. B. seitlich an den Türen und/oder unter dem Dach des betreffenden Fahrzeugs angeordnet werden. Damit können bei einem Kraftfahrzeug der in Fig. 15 dargestellten Art insbesondere z. B. Sitze, Airbags etc. gescannt und überprüft werden.

Im Bereich des Laderaumes bzw. Kofferraumes eines Fahrzeuges der in Fig. 15 dargestellten Art könnte vorteilhaft z. B. eine Überprüfung der Sicherheitsausrüstung (z. B. Warndreieck, Verfallsdatum des Verbandskastens, etc.) realisiert werden.

Falls eine Überwachung des Laderaumes vorgesehen ist, so ist eine Bedienbarkeit des RFID-Systems durch einen Benutzer des Fahrzeuges von Vorteil. Hierfür kann das RFID-System z. B. in eine ohnehin vorhandene Fahrzeugelektronik integriert werden.

Abweichend vom dargestellten Ausführungsbeispiel könnte es sich bei dem Fahrzeug 48m z. B. auch um ein Wasserfahrzeug oder Luftfahrzeug handeln. Für die Funktion wesentlich ist eine gewisse Abschirmwirkung einer Behältnisstruktur (z. B. metallische Karosserieteile), um die Vorteile der Erfindung zu erreichen.

Zusammenfassend wurden mit den obigen Ausführungsbeisbielen "RFID-Funkbehälter" für vielfältige Anwendungen beschrieben. Wesentlich ist hierbei eine Berücksichtigung einer Abschirmung, welche bei der Erfindung vorteilhaft ausgenutzt wird.

In vielen Bereichen ist selektive, lokal exakt begrenzte RFID-Erfassung erforderlich. Anstatt teure Lesegeräte mit ausgeklügelten Filtermechanismen, die die "richtigen" von den "falschen" Transpondern trennen können, kann bei der Erfindung eine "natürliche Abschirmwirkung" von dreidimensionalen Konstruktionen (z. B. metallischen Behältnissen) genutzt werden. Des weiteren wurden Antennenlösungen und Anschlussmöglichkeiten vorgestellt, die nicht mit dem eigentlichen Nutzungszweck des jeweiligen Behältnisses interferieren. Es ist dadurch sehr einfach möglich RFID-Erfassung und Identifikation auf engstem Raum zu sehr geringen Kosten zu erzielen.

Die Funktionsweise der Ausführungsbeispiele kann wie folgt knapp umrissen werden:
1. Voraussetzung: Eine Behältnisstruktur, z. B. eine weitgehend oder nahezu geschlossene Metallkonstruktion, mit elektromagnetischen Abschirmeigenschaften in den für das betreffende RFID-System relevanten Frequenzbereichen (z. B. passive RFID bei 13,56 bzw. 840-980 MHz).
2. Zielsetzung: Objekte, die sich innerhalb dieses Behältnisses befinden, sollen mittels RFID eindeutig erfasst werden können.
3. Realisierung: Eine zur Kommunikation mit den Transpondern vorgesehene RFID-Antenneneinrichtung wird im Aufnahmeraum des Behältnisses angeordnet. Hierfür können z. B. Teile einer das Behältnis bildenden Metallkonstruktion so modifiziert werden, dass sie als RFID-Antennen wirken ohne die Funktion des Behältnisses zu beeinträchtigen. Bemerkenswert ist, dass nicht aufwendige, platzraubende Antennen oder RFID-Lesegeräte in bekannte Behältnisse integriert werden müssen, sondern Teile der Behältnisse so modifiziert werden können, dass sie selbst als Antennen wirken. Dadurch wird das Behältnis selbst zur Antenne und damit ein Bestandteil des RFID-Systems.

Beispielsweise können Antennen in die Seitenwände bzw. die Konstruktion des jeweiligen Behältnisses vollständig integriert werden. In vielen Fällen können einzelne oder mehrere Wände oder Abtrennungen selbst als Antennen ausgeführt werden. Dadurch werden weder die Funktion noch die äußere Form des Behältnisses beeinträchtigt. Bevorzugt ist es, eine Integration der Antennen durchzuführen, die sich nahtlos in die Grundfunktionalität des einzelnen Behältnisses einfügt.

Insbesondere falls von dem RFID-System nur die Antennen in verschiedene, abschirmende Behälter (Boxen, Regale, Schränke etc.) integriert werden, so können die erforderlichen elektrischen Anschlüsse mittels handelsüblicher Steckverbinder (oder anderer elektrischer Verbindungsmittel) nach außen geführt werden.

Dadurch können beispielsweise verschiedene Transportbehälter (z. B. Catering-Trolleys in Flugzeugen, Wertsachenbehälter etc.) sehr einfach angeschlossen werden. Mit Hilfe einer Art Bus-System können mehrere Antennen (Behälter) sequentiell betrieben werden, ohne dass größere Umbauten an der vorhandenen Konstruktion notwendig werden.

Bei Bedarf kann auch das RFID-Lesegerät selbst in das einzelne Behältnis mit eingebaut werden. Dies hat z. B. den Vorteil, dass das jeweilige Behältnis unabhängig von externen Lesegeräten betrieben werden kann.

Bei Verwendung von HF-Kabeln muss die erforderliche Kabellänge bzw. die HF-technische Anpassung berücksichtigt werden. Im einfachsten Fall werden nur die Kabel für die Antennen benötigt, da das Lesegerät selbst extern angeordnet ist. Es ist auch möglich durch so genannte HF(UHF)-Multiplexer eine größere Anzahl von Antennen an einem Lesegerät zu betreiben und entsprechend zu verkabeln. Dadurch kann eine Vielzahl von Behältern, z. B. an Bord eines Fahrzeuges (z. B. LKW) mit nur einem Lesegerät erfasst werden.

Sämtliche Antennenformen können sowohl direkt in eine der Seitenwände oder sonstigen Umgrenzungen der Behältnisse integriert oder auch nachträglich eingebaut werden. Es ist anzumerken, dass sich in der Regel eine Antennenlösung finden lässt, mit der das eingeschlossene Volumen elektromagnetisch vollständig "ausgeleuchtet" werden kann. Es können sich, abhängig von den Dimensionen des Behältnisses, resonante Strukturen ausbilden, die das Erfassen des Inhalts sehr positiv beeinflussen. Beispielsweise bei einer Wellenlänge von ca. 33 cm im UHF-Bereich lässt sich dies schon bei relativ kleinen Abmessungen verwirklichen.

Insbesondere sind folgende Antennenformen einsetzbar:

### 1. Stabantennen

Auch die klassische Kofferradio-Antenne eignet sich für RFID. Zweckmäßgerweise können Streben, Eck- bzw. Kantenversteifungen eines Behältnisses als Stabantenne ausgebildet werden.

### 2. Dipolantenne

Die zweiarmige Dipolantenne kann in unterschiedlichen Bauformen und Längen größere Abmessungen überbrücken und eine entsprechende Metallkonstruktion vollständig ausleuchten. Mehrere Antennen können verwendet werden, wenn selektive Erfassung erforderlich ist.

### 3. Flächenantenne (Patch-Antenne)

Dieser Antennentyp ist ideal geeignet um ganze Seitenwände oder Teile davon als Antenne zu verwenden. Dies erleichtert den Ein- oder Umbau und interferiert in keiner Weise mit den Nutzungseigenschaften des Behältnisses. Mit Bezug auf die Fig. 10 und 11 wurden einige Beispiele für die Anordnung von Patch-Antennen beschrieben. Fig. 10 zeigt eine Ausführung, bei der im Wesentlichen die gesamte Seitenwand als einzelne Antenne wirkt, während Fig. 11 eine Antennenkaskade zur Ausleuchtung des gesamten Behälters verwendet wird.

### 4. Strahler

UHF-Strahler können z. B. als Hornstrahler ausgebildet sein und dazu verwendet werden, Strahlung hoher Leistungsdichte in enge Räume einzuspeisen.

### 5. Induktionsspulen für den HF Bereich

Insbesondere für den Einsatz von HF-RFID bei 13,56 MHz können Spulen in Form von in Begrenzungen (z. B. Wände des Behältnisses) eingelassenen Leiter- (z. B. Metalldraht-) Windungen zum Einsatz kommen, die eine induktive Kopplung mit den Transpondern gewährleisten.

Die Erfindung besitzt ein sehr breites Anwendungsspektrum. Nachfolgend seien nochmals einige Beispiele näher erläutert.

### 1. IT-Server-Rack

Eine solche Anwendung wurde bereits oben mit Bezug auf die Fig. 1 bis 6 beschrieben. Nachfolgend nochmals einige mögliche Detailaspekte dieser Anwendung:
- Eine bevorzugte Verwendung ergibt sich z. B. für "19 Zoll IT-Schränke" (Sever-Racks).
- Verwendung von Stab-, Dipol-, oder Flächenantennen. Eine mögliche Ausführung eines RFID-IT-Racks verwendet Stabantennen, die nachträglich eingebaut werden oder als modifizierte Teile einer inneren Behältnisstruktur ausgebildet werden. Die Anschlüsse werden z. B. mit den üblichen IT-Kabeln zusammen in das Rack eingeführt.
- Austausch von einer oder mehrer Seitenwände durch ganze Flächenantennen.
- Anschluss der Antennenkabel durch Norm(klick)stecker, welche sehr leicht außen am Rack angebracht werden können.
- Einführung unterschiedlicher Transpondertypen zur Kennzeichnung (a) des Schranks selbst, (b) der einzelnen Server (Inhalt), und (c) der einzelnen Plätze, z. B. ein Transponder pro Höhenheit (Eine Höheneinheit U entspricht einem Zoll. Große Racks haben eine Höhe bis 42 U).
- Ist eine oder sind mehrere Höheneinheiten von einem eingebauten Server belegt, können die Platz-Tags nicht mehr gelesen werden. Durch einfache Subtraktion lässt sich die Belegung nicht nur inhaltlich sondern auch räumlich exakt ermitteln.

### 2. Telekommunikations-Rack

Das Telekommunikations-Rack ist analog dem IT-Rack zu betrachten. Es können jedoch noch einige zusätzliche Merkmale vorgesehen sein:
- Die Abmessungen können stark variieren, von typischen 19 Zoll-Racks bis zu kleinen Kästen für Telefonanlagen.
- Es werden typischerweise aktive Komponenten (z. B. Switches, Router) und passive Komponenten (z. B. Patchfelder) eingebaut.

Es können auch herkömmliche Schaltschränke für die Elektroinstallationstechnik in Gebäuden mit integrierten Antennen zur Identifikation der darin enthaltenen Komponenten, z. B. Sicherungen, Schalter etc. ausgestattet werden.

### 3. Transportcontainer

Es kommen vor allem alle aus dem Stand der Technik als solche bekannten Containertypen, insbesondere z. B. für See- und Landtransport, in Frage. Aufgrund der typischerweise erheblichen Größe solcher Behältnisse können kaskadierte Patchantennen vorteilhaft sein. Diese lassen sich z. B. in die Seitenwände integrieren. Durch standardmäßige oder spezielle Steckverbindungen oder dergleichen können gestapelte Behälter gleichsam vernetzt und somit sequentiell ausgelesen werden. Eine andere Möglichkeit besteht darin, ein Lesegerät von außen direkt mittels Stecker anzuschließen. So können die bereits heute eingesetzten "elektronischen Plomben" direkt den Inhalt des Containers erfassen und gegebenenfalls weiterleiten (z. B. über Satellit).

### 4. Fahrzeuge und Koffer für Werttransporte

Hierunter fallen Spezialbehälter beispielsweise für:
- Militärische Sicherheitstransporte,
- Transport von gefährlichen Gütern,
- Transport von Medikamenten oder Krankheitserregern,
- Geld- und Schmucktransporte, etc.

Häufig gibt es in bekannten Transportfahrzeugen Vorrichtungen zum Aufnehmen oder Haltern von Behältern. Werden die Antennenanschlüsse über rastende Steckverbinder kontaktiert, kann der Inhalt erfasst werden, sobald der Behälter an seinem richtigen Platz ist. Wird er unbefugt entfernt, kann sofort ein Alarm ausgelöst werden. Man erzielt dadurch eine gewisse Doppelfunktion.

### 5. Container, Behälter, Koffer für Kunstgegenstände

Für diese Transporbehälter gilt der vorstehend unter 3. und 4. beschriebene Sachverhalt. Zusätzlich können durch die Integration von RFID-Antennen folgende Erweiterungen eingeführt werden:
- Auslesen von an Kunstgegenständen angebrachten Funksensoren, welche typischerweise ebenfalls im UHF-Bereich arbeiten können. Dadurch können Erschütterungen, Feuchtigkeit, Temperatur etc. während des Transports für jedes Einzelstück überwacht werden.
- Lückenlose Überwachung des Transportverlaufs durch Korrelation der Einzellesungen mit den Aufenthaltsorten. Man weiß beispielsweise, ob der Behälter gerade an ein Lesegerät im Fahrzeug, im Lagerraum oder im Ausstellungsraum angeschlossen ist.
- In Verbindung mit einer elektronischen Plombe erhält man eine vollständig transparente Lösung.

### 6. "Trolleys"

Hier sind beispielsweise Rollbehälter mit Verpflegung in Flugzeugen gemeint, die im Rahmen der Erfindung detailliert Auskunft über die Beladung mit Mahlzeiten geben können. Des weiteren ist der Aufbereitungszyklus, z. B. Reinigung, Instandsetzung, Befüllung etc. jederzeit für den einzelnen Behälter darstellbar. Zum Einsatz können auch hier Flächen-, Dipol-, oder Stabantennen kommen.

Es wurde gezeigt, wie unter Ausnutzung einer Abschirmung der RFID-Schreib-LeseVorgang exakt lokal begrenzt werden kann. Es wurden Möglichkeiten beschrieben, bereits im Einsatz befindliche Behältnisse so umzurüsten, dass ihr Einsatz nicht beeinträchtigt wird.

## Patentansprüche

1. Behältnis (10), umfassend
- einen Aufnahmeraum (18) zur Aufnahme von jeweils mit einem RFID-Transponder (14) versehenen Artikeln (12),
- eine Abschirmung (16) zum Strahlungsabschirmen des Aufnahmeraumes (18), und
- eine im Aufnahmeraum (18) angeordnete, mit einem RFID-Lesegerät (26) elektrisch verbindbare RFID-Antenneneinrichtung mit wenigstens einer Antenne (20) zur Kommunikation mit den Transpondern (14),
**dadurch gekennzeichnet,**
**dass** das Behältnis (10) Haltemittel umfasst, die fest vorgegebene Aufnahmepositionen für die wahlweise im Aufnahmeraum (18) aufzunehmenden Artikel (12) vorsehen,
**dass** die Antenne (20) durch ein sich durchgehend über die Aufnahmepositionen erstreckendes Element ausgebildet ist oder eine entsprechende Mehrzahl von einzelnen Antennen vorgesehen ist, und
**dass** zur Erfassung der Belegung der einzelnen Aufnahmepositionen weitere Transponder (24) im Aufnahmeraum (18) verteilt angeordnet sind, deren Kommunikationsverbindung mit der RFID-Antenneneinrichtung entsprechend der Belegung der einzelnen Aufnahmepositionen verschlechtert wird.

2. Behältnis (10) nach Anspruch 1, wobei für jede vorgegebene Aufnahmeposition ein Transponder (24) vorgesehen ist, der im Falle eines aufgenommenen Artikels (12) in der betreffenden Position durch diesen Artikel (12) funktechnisch abgeschirmt wird.

3. Behältnis (10) nach Anspruch 2, wobei die funktechnische Abschirmung des Transponders (24) durch eine metallische Gehäusestruktur des betreffenden Artikels (12) erfolgt.

4. Behältnis (10) nach einem der vorangehenden Ansprüche, umfassend ferner eine mechanische Behältnisstruktur, wobei das die Antenne (20) ausbildende Element ein Element, insbesondere ein tragendes Element, der mechanischen Behältnisstruktur ist.

5. Behältnis (10) nach Anspruch 4, wobei die Antenne (20) durch eine langgestreckte Strebe der mechanischen Behältnisstruktur ausgebildet ist.

6. Behältnis (10) nach einem der Ansprüche 1 bis 4, wobei die Antenne (20) eine flächig ausgedehnte Antenne ist, insbesondere ausgebildet durch eine Seitenwand oder Bodenwand oder oberseitige Wand der mechanischen Behältnisstruktur.

7. Behältnis (10) nach einem der Ansprüche 1 bis 3, wobei die entsprechende Mehrzahl von einzelnen Antennen vorgesehen ist, um die genauen Positionen aller im Aufnahmeraum (18) befindlichen Artikel (12) zu detektieren.

8. Behältnis (10) nach einem der vorangehenden Ansprüche, ferner umfassend eine von außen zugängliche elektrische Anschlusseinrichtung (32, 34, 38, 40).

9. Behältnis (10) nach einem der vorangehenden Ansprüche, ferner umfassend wenigstens einen im Aufnahmeraum (18) angeordneten RFID-Transponder (22) zur Bereitstellung von auslesbaren Daten betreffend das Behältnis (10).

10. Behältnis (10) nach einem der vorangehenden Ansprüche, wobei die aufzunehmenden Artikel (12) elektrische oder elektronische Geräte sind, insbesondere wobei das Behältnis (10) ein IT-Rack darstellt.

11. Behältnis (10) nach einem der vorangehenden Ansprüche, ferner umfassend eine Sensoreinrichtung (46).

12. RFID-System (1), umfassend wenigstens ein Behältnis (10) nach einem der vorangehenden Ansprüche und wenigstens ein Lesegerät (26) zum Identifizieren der im Behältnis (10) befindlichen Transponder (14) unter Verwendung der im abgeschirmten Aufnahmeraum (18) angeordneten RFID-Antenneneinrichtung (20).

13. RFID-System (1) nach Anspruch 12, wobei das Lesegerät (26) mit einer Multiplexeinrichtung (28) zum Anschluss mehrerer RFID-Antennen (20) verbunden ist.

14. RFID-System (1) nach Anspruch 12 oder 13, wobei das Behältnis (10) eine mechanische Struktur, insbesondere ein Chassis, eines Fahrzeuges (48) ist und die darin aufzunehmenden Artikel (12) im Fahrzeug (48) installierte Fahrzeugkomponenten sind.

## Claims

1. A container (10) comprising
- a receiving space (18) for receiving articles (12) each provided with a RFID transponder (14),
- a shielding (16) for shielding the receiving space (18) against radiation, and
- a RFID antenna device arranged in the receiving space (18) and having at least one antenna (20) for communicating with the transponders (14),
**characterised in that**
the container (10) comprises holding means, which provide predefined receiving positions for the articles (12) to be selectively received in the receiving space (18),
the antenna (20) is formed by an element extending continuously across the receiving positions, or **in that** a respective plurality of individual antennae is provided, and
further transponders (24) are arranged, distributed in the receiving space (18) for detecting the occupancy of individual receiving positions, wherein their communication link with the RFID antenna unit deteriorates in dependence of the occupancy of the individual receiving positions.

2. The container (10) according to claim 1, wherein each predefined receiving position has a transponder (24) assigned to it, which, in case an article (12) is received in the respective position, is shielded by this article (12) with regard to radio communications.

3. The container (10) according to claim 2, wherein the shielding of the transponder (24) with regard to radio communications is effected by a metallic housing structure of the respective article (12).

4. The container (10) according to one of the preceding claims, further comprising a mechanical container structure, wherein the element forming the antenna (20) is an element, in particular a load-bearing element, of the mechanical container structure.

5. The container (10) according to claim 4, wherein the antenna (20) is formed by an elongated strut of the mechanical container structure.

6. The container (10) according to one of claims 1 to 4, wherein the antenna (20) is an antenna spread over a surface, formed in particular by a side wall or bottom wall or top wall of the mechanical container structure.

7. The container (10) according to one of claims 1 to 3, wherein the corresponding number of individual antennae is provided in order to detect the exact positions of all articles (12) present in the receiving space (18).

8. The container (10) according to one of the preceding claims, further comprising an electrical connection device (32, 34, 38, 40) accessible from outside.

9. The container (10) according to one of the preceding claims, further comprising at least one RFID transponder (22) arranged in the receiving space (18) for providing readable data concerning the container (10).

10. The container (10) according to one of the preceding claims, wherein the articles (12) to be received are electrical or electronic devices, in particular wherein the container (10) represents an IT rack.

11. The container (10) according to one of the preceding claims, further comprising a sensor device (46).

12. An RFID system (1) comprising at least one container (10) according to one of the preceding claims and at least one reading device (26) for identifying the transponders (14) present in the container (10) using the RFID antenna device (20) arranged in the shielded receiving space (18).

13. The RFID system (1) according to claim 12, wherein the reading device (26) is connected to a multiplexing device (28) for the connection of a plurality of RFID antennae (20).

14. The RFID system (1) according to claim 12 or 13, wherein the container (10) is a mechanical structure, in particular a chassis of a vehicle (48), and wherein the articles (12) to be received in it are vehicle components installed in the vehicle (48).

## Revendications

1. Conteneur (10), comprenant
- un espace de réception (18) pour recevoir des articles (12) dotés respectivement d'un transpondeur à identification par radiofréquence (IRF) (14),
- un blindage (16) pour la protection contre les radiations de l'espace de réception (18), et
- un dispositif d'antennes à identification par radiofréquence (IRF), disposé dans l'espace de réception (18) pouvant être relié électriquement à un lecteur IRF (26) avec au moins une antenne (20) pour la communication avec les transpondeurs (14),
**caractérisé en ce que**
le conteneur (10) comprend des moyens de fixation qui prévoient des positions de réception fermement prédéfinies pour les articles (12) à recevoir facultativement dans l'espace de réception (18),
**en ce que** l'antenne (20) est constituée par un élément s'étendant sans interruption sur les positions de réceptions ou une pluralité correspondante d'antennes individuelles est prévue, et
**en ce que** pour saisir l'occupation des positions de réception individuelles d'autres transpondeurs (24) sont disposés répartis dans l'espace de réception (18), dont la liaison de communication avec le dispositif d'antennes IRF est détériorée selon l'occupation des positions de réception individuelles.

2. Conteneur (10) selon la revendication 1, un transpondeur (24) étant prévu pour chaque position de réception prédéterminée, lequel en cas d'un article (12) reçu dans la position concernée est radiotechniquement protégé par cet article (12).

3. Conteneur (10) selon la revendication 2, la protection radiotechnique du transpondeur (24) ayant lieu par une structure de boîtier métallique de l'article correspondant (12).

4. Conteneur (10) selon l'une quelconque des revendications précédentes, comprenant en outre une structure de conteneur mécanique, l'élément constituant l'antenne (20) est un élément, notamment un élément porteur, de la structure de conteneur mécanique.

5. Conteneur (10) selon la revendication 4, l'antenne (20) étant constituée par un montant allongé de la structure de conteneur mécanique.

6. Conteneur (10) selon l'une quelconque des revendications 1 à 4, l'antenne (20) étant une antenne étendue à plat, notamment constituée par une paroi latérale ou une paroi de fond ou une paroi supérieure de la structure de conteneur mécanique.

7. Conteneur (10) selon l'une quelconque des revendications 1 à 3, la pluralité correspondante des antennes individuelles étant prévue pour détecter les positions exactes de tous les articles (12) se trouvant dans l'espace de réception (18).

8. Conteneur (10) selon l'une quelconque des revendications précédentes, comprenant en outre un dispositif de connexion (32, 34, 38, 40) électrique accessible de l'extérieur.

9. Conteneur (10) selon l'une quelconque des revendications précédentes, comprenant en outre au moins un transpondeur à identification par radiofréquence (IRF) (22) disposé dans l'espace de réception (18) pour fournir des données lisibles concernant le conteneur (10).

10. Conteneur (10) selon l'une quelconque des revendications précédentes, les articles à recevoir (12) étant des appareils électriques ou électroniques, notamment le conteneur (10) représentant un châssis informatique.

11. Conteneur (10) selon l'une quelconque des revendications précédentes, comprenant en outre un dispositif de détection (46).

12. Système d'identification par radiofréquence (IRF) (1), comprenant au moins un conteneur (10) selon l'une quelconque des revendications précédentes et au moins un lecteur (26) pour identifier les transpondeurs (14) se trouvant dans le conteneur (10) en utilisant le dispositif à antenne d'identification par radiofréquence (IRF)(20) disposé dans l'espace de réception (18) protégé.

13. Système d'identification par radiofréquence (IRF) (1) selon la revendication 12, le lecteur (26) étant relié à un dispositif de multiplexage (28) pour connecter plusieurs antennes IRF (20).

14. Système d'identification par radiofréquence (IRF) (1) selon la revendication 12 ou 13, le conteneur (10) étant une structure mécanique, notamment un châssis, un véhicule (48) et les articles (12) à recevoir dedans étant des composants de véhicule installés dans le véhicule (48).
